# EUROPÄISCHE PATENTANMELDUNG

(11) **EP 4 063 269 A1**
(43) Veröffentlichungstag der Anmeldung: **28.09.2022**
(21) Anmeldenummer: 21165259.9
(22) Anmeldetag: 26.03.2021
(51) Int. Cl.: B64D 11/02, A47K 13/26

(54) **BEFESTIGUNGSVORRICHTUNG, INSBESONDERE WC-SITZBEFESTIGUNGSVORRICHTUNG**

(71) Anmelder: I.Gluesystems GmbH, 73262 Reichenbach an der Fils (DE)
(72) Erfinder: Hummel, Bastian, 73230 Kirchheim/Teck (DE)
(74) Vertreter: Daub, Thomas

(57) **Zusammenfassung**

Die Erfindung geht aus von einer Befestigungsvorrichtung, insbesondere WC-Sitzbefestigungsvorrichtung, zur Befestigung einer Anbaueinheit (12a), insbesondere einer WC-Sitzgarnitur, an einer Unterlage (14a), insbesondere an einem WC-Sitz, mit einer Bodeneinheit (16a; 16b; 16c; 16d; 16e; 16f), die eine Klebefläche (18a; 18b; 18c; 18d; 18e; 18f) aufweist und dazu vorgesehen ist, auf eine Fläche (20a) der Unterlage (14a) aufgeklebt zu werden.

Es wird vorgeschlagen, dass die Befestigungsvorrichtung einen Befestigungsadapter (22a; 22b; 22c; 22d; 22e; 22f) aufweist, der zur Befestigungskopplung mit der Bodeneinheit (16a; 16b; 16c; 16d; 16e; 16f) vorgesehen ist.

## Beschreibung

### Stand der Technik

Die Erfindung betrifft eine Befestigungsvorrichtung, insbesondere eine WC-Sitzbefestigungsvorrichtung.

Es ist bereits eine Befestigungsvorrichtung, insbesondere WC-Sitzbefestigungsvorrichtung, zur Befestigung einer Anbaueinheit, insbesondere einer WC-Sitzgarnitur, an einer Unterlage, insbesondere an einem WC-Sitz, mit einer Bodeneinheit, die eine Klebefläche aufweist und dazu vorgesehen ist, auf eine Fläche der Unterlage aufgeklebt zu werden, vorgeschlagen worden.

Die Aufgabe der Erfindung besteht insbesondere darin, eine gattungsgemäße Vorrichtung mit verbesserten Eigenschaften hinsichtlich eines Komforts, insbesondere eines Montagekomforts sowie einer Variabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Befestigungsvorrichtung, insbesondere WC-Sitzbefestigungsvorrichtung, zur Befestigung einer Anbaueinheit, insbesondere einer WC-Sitzgarnitur, an einer Unterlage, insbesondere an einem WC-Sitz, mit einer Bodeneinheit, die eine Klebefläche aufweist und dazu vorgesehen ist, auf eine Fläche der Unterlage aufgeklebt zu werden.

Es wird vorgeschlagen, dass die Befestigungsvorrichtung einen Befestigungsadapter aufweist, der zur Befestigungskopplung mit der Bodeneinheit vorgesehen ist.

Unter einer "Befestigungsvorrichtung" soll in diesem Zusammenhang insbesondere eine Vorrichtung verstanden werden, welche zur Befestigung einer Anbaueinheit, insbesondere einer WC-Sitzgarnitur, an einer Unterlage, insbesondere an einer WC-Keramik, vorgesehen ist. Insbesondere ist die Befestigungsvorrichtung zu einer zumindest teilweise lösbaren Verbindung einer Anbaueinheit an einer Unterlage vorgesehen, wobei zumindest ein Teil der Befestigungsvorrichtung bei einem Lösen fest mit der Unterlage verbunden bleibt und ein Teil der Befestigungsvorrichtung fest mit der Anbaueinheit verbunden bleibt. Bevorzugt ist die Befestigungsvorrichtung zu einem zumindest teilweisen Verkleben mit der Unterlage vorgesehen. Es wäre jedoch auch denkbar, dass die Befestigungsvorrichtung, insbesondere die Bodeneinheit der Befestigungsvorrichtung zusätzlich zu einer Klebeverbindung form- und/oder kraftschlüssig mit der Unterlage verbunden ist. Unter "form- und/oder kraftschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Unter einer "Anbaueinheit" soll in diesem Zusammenhang insbesondere eine Einheit verstanden werden, die zu einer, insbesondere gelenkigen, Verbindung mit einer Unterlage vorgesehen ist. Die Anbaueinheit ist insbesondere zu einem lösbaren Anbau an der Unterlage vorgesehen. Vorzugsweise ist die Anbaueinheit insbesondere von einer WC-Sitzgarnitur gebildet. Es sind jedoch auch andere, einem Fachmann als sinnvoll erscheinende Ausbildungen der Anbaueinheit denkbar. Die Unterlage dient insbesondere zu einer Befestigung der Anbaueinheit. Die Unterlage besteht insbesondere zumindest teilweise aus einer Keramik. Es wäre jedoch auch ein anderes, einem Fachmann als sinnvoll erscheinendes Material der Unterlage denkbar. Vorzugsweise ist die Unterlage von einer WC-Keramik gebildet. Es wäre jedoch auch eine andere, einem Fachmann als sinnvoll erscheinende Ausbildung denkbar, wie beispielsweise als Fliese.

Unter einer "Bodeneinheit" soll in diesem Zusammenhang insbesondere eine Einheit verstanden werden, die zu einer direkten Verbindung mit der Unterlage vorgesehen ist. Vorzugsweise bildet die Bodeneinheit eine Grundseite der Befestigungsvorrichtung aus. Die Bodeneinheit bildet insbesondere eine Grundplatte der Befestigungsvorrichtung aus, auf welcher weitere Bauteile der Befestigungsvorrichtung montiert sind. Die Bodeneinheit ist insbesondere dazu vorgesehen, zumindest werkzeuglos unlösbar mit der Unterlage verbunden zu werden, während auf der Bodeneinheit Bauteile der Befestigungsvorrichtung lösbar montiert sind. Die Bodeneinheit ist insbesondere zumindest teilweise plattenförmig ausgebildet. Es wäre jedoch auch eine andere, einem Fachmann als sinnvoll erscheinende Ausgestaltung der Bodeneinheit denkbar. Unter "lösbar" soll in diesem Zusammenhang insbesondere "zerstörungsfrei trennbar" verstanden werden. Die Klebefläche der Bodeneinheit dient insbesondere dazu, über einen Klebstoff mit einer anderen Fläche, insbesondere der Unterlage, verbunden zu werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Des Weiteren soll in diesem Zusammenhang unter einem "Befestigungsadapter" insbesondere ein Adapter, bevorzugt ein mehrteiliger Adapter, verstanden werden, der zu einer, insbesondere lösbaren, Befestigungskopplung mit der Bodeneinheit vorgesehen ist. Der Befestigungsadapter ist insbesondere von einem Funktionsadapter gebildet, welcher eine direkte Befestigungsfunktion bereitstellt. Vorzugsweise ist eine Verbindung zwischen dem Befestigungsadapter und der Bodeneinheit über den Befestigungsadapter zumindest teilweise einstellbar, insbesondere hinsichtlich eines Winkels. Vorzugsweise ist der Befestigungsadapter zu einer festen, insbesondere werkzeuglos unlösbaren, Verbindung mit zumindest einem Teil der Anbaueinheit, insbesondere der WC-Sitzgarnitur, vorgesehen. Die Verbindung zwischen dem Befestigungsadapter und der Bodeneinheit ist insbesondere frei von einer Schraubverbindung. Ferner ist der Befestigungsadapter insbesondere von einem reinen Scharbierdorn und/oder von einer reinen Abdeckung verschieden. Unter einer "Befestigungskopplung" soll in diesem Zusammenhang insbesondere eine Kopplung verstanden werden, bei welcher im befestigten Zustand eine Lagerkraftübertragung zwischen der Bodeneinheit und dem Befestigungsadapter erfolgt. Die Befestigungskopplung ist insbesondere lösbar. Bevorzugt wird mittels der Befestigungskopplung eine Haltekraft der Anbaueinheit realisiert.

Durch die erfindungsgemäße Befestigungsvorrichtung kann insbesondere eine vorteilhaft variable Befestigungsvorrichtung bereitgestellt werden. Es kann insbesondere auf der einen Seite eine vorteilhaft leicht zu befestigende Befestigungsvorrichtung bereitgestellt werden, welche zudem eine vorteilhaft hohe Haltekraft aufweist. Zudem kann mittels der Befestigungsvorrichtung ein Verstellen vermieden werden. Ferner kann insbesondere eine vorteilhafte Befestigungskopplung erreicht werden.

Ferner wird vorgeschlagen, dass die Befestigungsvorrichtung eine scharnierbauteilfreie Koppelstelle zwischen Bodeneinheit und Befestigungsadapter aufweist. Die Koppelstelle ist insbesondere zu einer Realisierung der Befestigungskopplung. Vorzugsweise befindet sich die Koppelstelle unterhalb eines Scharniers, insbesondere der WC-Sitzgarnitur, wobei das Scharnier sowohl ein Teil der Befestigungsvorrichtung bilden kann, als auch ein Teil der Anbaueinheit. Vorzugsweise bildet die Befestigungsvorrichtung einen Grundkörper aus, aus welchem ein Scharnier zur Anbindung der Anbaueinheit ragt, wobei die Koppelstelle innerhalb des Grundkörpers angeordnet ist. Der Grundkörper besteht insbesondere aus mehreren Bauteilen der Befestigungsvorrichtung. Der Grundkörper ist insbesondere von einem zylindrischen Volumen gebildet, in welchem zumindest die Bodeneinheit und der Befestigungsadapter angeordnet ist. Unter "scharnierbauteilfrei" soll in diesem Zusammenhang insbesondere verstanden werden, dass die Koppelstelle zwischen der Bodeneinheit und dem Befestigungsadapter vorzugsweise keine Koppelfläche ausbildet, die von einem Scharnierbauteil, wie insbesondere von einem Scharnierdorn oder einem Scharniergelenkbauteil, das eine Gleitlagerfläche oder eine Lagerfläche für ein Lager ausbildet, gebildet ist. Dadurch kann insbesondere eine vorteilhafte Kopplung zwischen der Bodeneinheit und dem Befestigungsadapter realisiert werden. Insbesondere kann dadurch eine vorteilhaft zuverlässige und insbesondere leicht zu lösende Befestigungskopplung realisiert werden.

Des Weiteren wird vorgeschlagen, dass der Befestigungsadapter relativ zur Bodeneinheit gezielt zur Einstellung in unterschiedlichen Positionen fixierbar ist. Bevorzugt ist der Befestigungsadapter relativ zur Bodeneinheit gezielt zur Einstellung in unterschiedlichen Positionen, vorzugsweise in einer Ebene parallel zur Klebefläche, insbesondere in Drehrichtung und/oder translatorisch, vorgesehen. Vorzugsweise ist der Befestigungsadapter in verschiedenen Verdrehpositionen relativ zur Bodeneinheit mit der Bodeneinheit koppelbar. Eine Verdrehposition des Befestigungsadapters ist insbesondere definiert, insbesondere in mehreren definierten Winkellagen oder stufenlos, relativ zu der Bodeneinheit einstellbar. Eine Verdrehposition des Befestigungsadapters wird insbesondere mit einer Kopplung des Befestigungsadapters an der Bodeneinheit festgestellt. Vorzugsweise kann durch eine gezielte Einstellung der Position des Befestigungsadapters relativ zu der Bodeneinheit eine Position der Anbaueinheit eingestellt werden. Dadurch kann insbesondere eine vorteilhaft variable Befestigungsvorrichtung bereitgestellt werden. Vorzugsweise kann dadurch insbesondere eine Einstellbarkeit der Befestigungsvorrichtung auch nach einem Verkleben der Bodeneinheit realisiert werden.

Es wird ferner vorgeschlagen, dass die Befestigungsvorrichtung eine Verzahnungsstruktur aufweist, über die die Bodeneinheit und der Befestigungsadapter im befestigten Zustand gekoppelt sind. Die Verzahnungsstruktur ist insbesondere dazu vorgesehen, eine Verdrehposition des Befestigungsadapters relativ zu der Bodeneinheit zu sichern. Eine Verdrehposition des Befestigungsadapters ist über die Verzahnungsstruktur insbesondere definiert in mehreren definierten Winkellagen relativ zu der Bodeneinheit einstellbar. Die Verzahnungsstruktur gibt dabei insbesondere mögliche Winkellagen zu einer Einstellung vor. Eine Fixierung der Verdrehposition des Befestigungsadapters durch die Verzahnungsstruktur wird insbesondere erst mit einer Kopplung des Befestigungsadapters an der Bodeneinheit festgestellt. Die Verzahnungsstruktur ist insbesondere von einer Microstruktur gebildet, die zu einem formschlüssigen Eingriff in eine korrespondierende Mikrostruktur vorgesehen ist. Alternativ wäre auch denkbar, dass eine Verdrehposition über einen selbsthemmenden Konus kraftschlüssig fixierbar ist. Eine Verdrehposition des Befestigungsadapters könnte über den selbsthemmenden Konus insbesondere definiert stufenlos relativ zu der Bodeneinheit eingestellt werden. Alternativ oder zusätzlich sind auch noch andere, einem Fachmann als sinnvoll erscheinende Kraft- und Formschlussverbindungen zu einer Verdrehsicherung denkbar.

Es wird weiter vorgeschlagen, dass die Befestigungsvorrichtung einen Verriegelungs- und/oder Klemmmechanismus aufweist, über den die Bodeneinheit und der Befestigungsadapter im befestigten Zustand gekoppelt sind. Der Verriegelungs- und/oder Klemmmechanismus ist insbesondere zu einer axialen Sicherung des Befestigungsadapters an der Bodeneinheit vorgesehen. Bevorzugt ist der Verriegelungs- und/oder Klemmmechanismus lösbar ausgebildet, insbesondere zu einer nachträglichen Trennung des Befestigungsadapters von der Bodeneinheit. Insbesondere ist der Befestigungsadapter beispielsweise zu einer Montage, einer Reinigung und/oder zu einem Austausch der Anbaueinheit von der Bodeneinheit trennbar. Zudem wird vorgeschlagen, dass der Verriegelungs- und/oder Klemmmechanismus als Rastmechanismus ausgebildet ist. Vorzugsweise ist der Verriegelungs- und/oder Klemmmechanismus insbesondere von einer Rasteinheit gebildet. Unter einer "Rasteinheit" soll dabei insbesondere eine Einheit mit wenigstens einem Rastelement verstanden werden, das bei einem Befestigungsvorgang elastisch ausgelenkt wird, um anschließend durch eine innere Spannkraft hinter einem korrespondierenden Rastelement einzurasten. Dabei ist insbesondere denkbar, dass ein zusätzliches Federelement und/oder die Federelastizität zumindest eines anderen Funktionsbauteils genutzt werden kann, um eine Verrastung zu realisieren. Bevorzugt ist der Verriegelungs- und/oder Klemmmechanismus mittels formschlüssiger Einbettung mindestens zweier Bauteile durch Einklappen sektionaler oder einstückig wirkender Elemente vorgesehen, wobei ein Einklappen beispielsweise durch Überschieben einer Abdeckeinheit oder einem ähnlichen Bauteil realisiert werden kann. Die formschlüssige Einbettung kann dabei insbesondere sowohl nach innen, als auch nach außen hin wirkend sein. Die axial, sowie radial wirkenden Kräfte, können durch kraft- und oder formschlüssige Mikrostrukturen, Verriegelungen und/oder mit magnetischen Wirkungen aufgenommen werden. Die Verriegelung kann vorzugsweise mittels Feder und/oder Federwirkung durch Memoryeffekte, oder magnetische Wirkung oder der gleichen positioniert werden. Dadurch kann eine vorteilhaft einfache und schnelle Kopplung ermöglicht werden und vorzugsweise eine einfache Einstellbarkeit realisiert werden. Es kann insbesondere eine vorteilhafte einfach herzustellende Befestigungskopplung bereitgestellt werden. Zudem kann insbesondere ein werkzeugloses Lösen der Befestigungskopplung realisiert werden.

Ferner wird vorgeschlagen, dass der Verriegelungs- und/oder Klemmmechanismus ein Betätigungselement, wie insbesondere einen Druckknopf, aufweist, der dazu vorgesehen ist, eine Rast- und/oder Klemmverbindung des Verriegelungs- und/oder Klemmmechanismus zu lösen. Vorzugsweise weist der Verriegelungs- und/oder Klemmmechanismus zumindest ein Rast- und/oder Klemmelement auf, welches mittels des Betätigungselements aus einer Raststellung bewegt werden kann. Bevorzugt ist das Rast- und/oder Klemmelement translatorisch oder verschwenkbar gelagert und kann zwischen einer Raststellung einer Lösestellung bewegt werden, wobei das Betätigungselement das Rast- und/oder Klemmelement bei einer Betätigung von einer Raststellung in eine Lösestellung bewegen kann. Insbesondere können mittels des Betätigungselements Systembauteile der Befestigungsvorrichtung optional, horizontal sowie vertikal über eine Pushfunktion miteinander verbunden sowie gelöst werden. Die Verriegelung kann mit den oben beschriebenen Funktionen der axial und radial wirkenden Verbindungen ausgeführt sein, sowie über Kulissenführungen und Laufflächen geführt und gelenkt werden. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden. Dadurch kann insbesondere ein vorteilhafter Verriegelungs- und/oder Klemmmechanismus bereitgestellt werden. Es kann insbesondere eine vorteilhafte einfach herzustellende Befestigungskopplung bereitgestellt werden. Zudem kann insbesondere ein werkzeugloses Lösen der Befestigungskopplung realisiert werden.

Des Weiteren wird vorgeschlagen, dass die Befestigungsvorrichtung eine Abdeckeinheit aufweist, die neben einer Abdeckfunktion eine Systemfunktion aufweist. Dabei sind nach diesseitiger Auffassung verschiedene, einem Fachmann als sinnvoll erscheinende Systemfunktionen denkbar, wie beispielsweise eine Dichtfunktion, eine Verriegelungsfunktion, eine Positionierfunktion, eine Abziehfunktion und/oder eine Stempelfunktion. Die Abdeckeinheit ist insbesondere dazu vorgesehen, die Bodeneinheit sowie zumindest teilweise den Befestigungsadapter abzudecken. Vorzugsweise bildet die Abdeckeinheit einen Aufnahmebereich zur Aufnahme der Bodeneinheit sowie zumindest teilweise des Befestigungsadapters. Die Abdeckeinheit ist insbesondere von einer Rosette gebildet, welche in einem montierten Zustand zumindest teilweise über die Bodeneinheit gestülpt ist. Die Abdeckeinheit kann ein oder mehrteilig ausgeführt sein. Ferner kann die Abdeckeinheit aus einem einzelnen Material bestehen oder aus einem Materialmix, insbesondere mit Softbereichen, bestehen, wodurch Betätigungselemente von außen bedient, sowie Dichtfunktionen übernommen werden können. Dadurch kann insbesondere eine vorteilhafte funktionale Befestigungsvorrichtung bereitgestellt werden. Es können insbesondere mehrere Funktionen mit der Abdeckeinheit realisiert werden. Hierdurch kann insbesondere ein vorteilhaft ruhiges und ebenmäßiges Erscheinungsbild bereitgestellt werden.

Es wird ferner vorgeschlagen, dass die Abdeckeinheit eine Verriegelungsfunktion zur Kopplung der Bodeneinheit und des Befestigungsadapters aufweist. Vorzugsweise ist die Abdeckeinheit in ihrem Design so ausgelegt, dass sie Verriegelungsfunktionen des Befestigungsadapters an der Bodeneinheit übernimmt. Bevorzugt ist die Abdeckeinheit bei einem Aufsetzen, insbesondere in eine Montageposition, dazu vorgesehen, den Verriegelungs- und/oder Klemmmechanismus zu betätigen, insbesondere um das Rast- und/oder Klemmelement in eine Rastposition zu bewegen, und/oder den Verriegelungs- und/oder Klemmmechanismus in der Rastposition zu sichern. Vorzugsweise ist die Abdeckeinheit dazu vorgesehen, das zumindest eine Rast- und/oder Klemmelement bei einem Aufsetzen, insbesondere in eine Montageposition, zumindest teilweise radial nach innen auszulenken. Bevorzugt kann die Abdeckeinheit Auslenkungsfortsätze aufweisen, welche dazu vorgesehen sind, das zumindest eine Rast- und/oder Klemmelement bei einem Aufsetzen, insbesondere in einer Montageposition, zumindest teilweise radial nach innen auszulenken. Dadurch kann insbesondere eine vorteilhafte funktionale Befestigungsvorrichtung bereitgestellt werden. Es kann insbesondere vorteilhaft eine Verriegelungsfunktion realisiert werden.

Es wird weiter vorgeschlagen, dass die Abdeckeinheit eine Positionierfunktion aufweist. Vorzugsweise dient die Abdeckeinheit insbesondere zu einer Positionierung eines Positioniermittels, insbesondere eines Positionierrings. Vorzugsweise kann die Abdeckeinheit die Betätigung und Platzierung des Positioniermittels zu der Unterlage übernehmen. Dadurch kann insbesondere eine vorteilhafte funktionale Befestigungsvorrichtung bereitgestellt werden. Es können insbesondere mehrere Funktionen mit der Abdeckeinheit realisiert werden.

Ferner wird vorgeschlagen, dass die Abdeckeinheit einen Grifffortsatz für einen Abziehvorgang aufweist. Vorzugsweise kann die Abdeckeinheit an ihrer Geometrie Designs aufweisen, welche ein Greifen beim Abziehen erleichtert. Als eine Ausführungsvariante hierzu wäre ein Bund an der Außengeometrie der Abdeckeinheit vorzusehen. Es sind jedoch auch andere, einem Fachmann als sinnvoll erscheinende Ausgestaltungen der Abdeckeinheit denkbar. Es wäre beispielsweise denkbar, dass die Abdeckeinheit über ein Griffelement verfügt, welches zu einem separaten Greifen vorgesehen ist. Dadurch kann insbesondere ein vorteilhaft einfaches Abziehen der Abdeckeinheit realisiert werden. Hierdurch kann insbesondere ein einfaches und schnelles Lösen der Abdeckeinheit und gegebenenfalls des Befestigungsadapters realisiert werden. Es wäre insbesondere denkbar, dass die Abdeckeinheit und der Befestigungsadapter einstückig ausgebildet sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Des Weiteren wäre denkbar, dass die Abdeckeinheit eine Stempelfunktion zum Ausbringen des Klebstoffs zu einer Verbindung der Bodeneinheit mit der Unterlage übernimmt. Ferner ist denkbar, dass die Abdeckeinheit optional die komplette obere Befestigerseite des Systems übernehmen und mit den oben beschriebenen Funktionen der axial und radial wirkenden Verbindungen ausgeführt sein kann.

Des Weiteren wird vorgeschlagen, dass die Befestigungsvorrichtung zumindest eine Positionierhilfeeinheit aufweist, die dazu vorgesehen ist, bei einer Montage eine Positionierung der Bodeneinheit zu unterstützen. Die Positionierhilfeeinheit ist insbesondere zu einer vorläufigen Fixierung der Bodeneinheit bei einer Montage, insbesondere vor einer Verklebung der Bodeneinheit auf der Unterlage, vorgesehen. Die Positionierhilfeeinheit ist insbesondere zu einer Positionsfixierung mit zuvor freier Beweglichkeit auf der Unterlage. Es wird ferner vorgeschlagen, dass die Positionierhilfeeinheit eine Klebefläche mit einem Sekundärklebstoff umfasst. Der Sekundärklebstoff unterscheidet sich insbesondere von Hauptklebstoff und weist insbesondere eine geringere Klebekraft auf. Der Sekundärklebstoff ist insbesondere wiederlösbar ausgebildet. Vorzugsweise weist die Positionierhilfeeinheit eine partielle oder vollflächige Klebstoffbeschichtung auf einer Fügeteilseite mit dem Sekundärklebstoff auf. Es wird weiter vorgeschlagen, dass die Positionierhilfeeinheit einen Positionierring aufweist. Der Positionierring ist insbesondere dazu vorgesehen, zumindest einen Teil der Bodeneinheit zu umschließen. Die Positionierhilfeeinheit ist insbesondere in freiem Design ausführbar und kann mit den Systembauteilen der Befestigungsvorrichtung kombiniert werden. Die Positionierhilfeeinheit kann ferner verschiedene Funktionen übernehmen, wie beispielsweise eine Klebstoffleit- und Begrenzungsfunktion und/oder die Fixierung weiterer Systembauteile der Befestigungsvorrichtung. Die Positionierhilfeeinheit kann insbesondere auch einzeln mit bestehenden WC-Befestigern eingesetzt werden und übernimmt hierbei alle beschriebenen Funktionen. Neben reinen Klebebefestigungen können auch Schraub-Klebebefestigungen positioniert werden. Dadurch kann insbesondere eine vorteilhafte Befestigungsvorrichtung bereitgesellt werden. Es kann insbesondere eine vorteilhaft leicht zu montierende Befestigungsvorrichtung bereitgestellt werden, welche mittels der Positionierhilfeeinheit vorpositioniert werden kann. Hierdurch kann insbesondere eine Montage ohne Verrutschen realisiert werden.

Es wird ferner vorgeschlagen, dass die Befestigungsvorrichtung ein Funktionseinlagemittel aufweist, das zu einer Einstell- und Lagerfunktion eine Ergänzungsfunktion aufweist. Das Funktionseinlagemittel ist insbesondere zu einer Anordnung zwischen der Bodeneinheit und dem Befestigungsadapter vorgesehen. Vorzugsweise handelt es sich bei dem Funktionseinlagemittel um ein optionales Bauteil. Es wird vorzugsweise vorgeschlagen, dass das Funktionseinlagemittel als Blockierelement ausgebildet ist, das dazu vorgesehen ist, eine Betätigungsfunktion des Betätigungselements zu unterbinden. Vorzugsweise ist das Funktionseinlagemittel dazu vorgesehen, eine Trennung des Befestigungsadapters von der Bodeneinheit zu unterbinden. Das Funktionseinlagemittel ist insbesondere von einer Funktionseinlage gebildet. Hierdurch kann insbesondere, beispielsweise bei öffentlichen Toiletten oder dergleichen, ein Diebstahlschutz realisiert werden. Das Funktionseinlagemittel kann eine optionale Ergänzung zu den Systembauteilen der Befestigungsvorrichtung übernehmen. Vorzugsweise kann das Funktionseinlagemittel beispielsweise eine form- und kraftschlüssig bremsende Wirkung, beispielsweise durch einen Materialmix aus Hart- und Weichkomponente, eine lösbare, verriegelnde, formschlüssige und/oder kraftschlüssige Verbindung, eine nicht lösbare, diebstahlsichere, verriegelnde, formschlüssige und/oder kraftschlüssige Verbindung, insbesondere gegen Vandalismus, und/oder eine haftungsoptimierende Wirkung übernehmen.

Es wird weiter vorgeschlagen, dass die Bodeneinheit mehrteilig ausgebildet ist. Vorzugsweise umfasst die Bodeneinheit die Positionierhilfeeinheit. Ferner weist die Bodeneinheit insbesondere ein Bodenelement auf, welches die Klebefläche aufweist und dazu vorgesehen ist, auf eine Fläche der Unterlage aufgeklebt zu werden. Die Bodeneinheit kann insbesondere Teile des Verriegelungs- und/oder Klemmmechanismus ausbilden. Ferner kann die Bodeneinheit Mittel zu einer Verdrehsicherung aufweisen, über welche der Befestigungsadapter in einer definierten Drehposition relativ zu der Bodeneinheit fixiert werden kann. Durch die Einstückigkeit oder kraft- sowie formschlüssig wirkende Verbindung von Mikrostruktur und selbsthemmendem Konus kann eine stufenlose Positionierung während der Montage erfolgen. Ferner kann die Bodeneinheit hydrophile Funktionen in Form von Microstrukturen auf einer Fügeteilfläche der Bodeneinheit aufweisen, wobei beispielsweise ein hydrophiler Materialmix einen Aushärteprozess beschleunigen kann. Ferner kann die Bodeneinheit zur Verbesserung der Oberflächenspannung entsprechend vorbehandelt sein. Dadurch kann insbesondere eine vorteilhafte variable und insbesondere modulare Bodeneinheit bereitgestellt werden. Es können insbesondere verschiedene Funktionen an der Bodeneinheit realisiert werden.

Ferner wird vorgeschlagen, dass die Bodeneinheit ein Klebereservoir, insbesondere eine Klebstoffkapsel oder eine Klebstoffapplikation, umfasst. Das Klebereservoir ist insbesondere von einem vorzugsweise geschlossenen Reservoir zur Aufnahme eines Klebstoffs gebildet. Vorzugsweise ist das Klebereservoir dazu vorgesehen, während eines Fügeprozesses zumindest teilweise zerstört zu werden, wobei ein Klebstoff über eine Öffnung in dem Bodenelement in einen Fügespalt, insbesondere zwischen der Klebefläche der Bodeneinheit und der Fläche der Unterlage, gepresst wird. Eine in dem Klebstoffreservoir aufgenommene Klebstoffmenge entspricht insbesondere einer für den Fügeprozess benötigten Klebstoffmenge. Das Klebstoffreservoir ist insbesondere vordosiert. Es sind insbesondere verschiedene, einem Fachmann als sinnvoll erscheinende Ausgestaltungen des Klebstoffreservoirs denkbar. Vorzugsweise kann das Klebstoffreservoir beispielsweise als Klebstoffkapsel oder Klebstoffapplikation ausgebildet sein. Vorzugsweise ist das Klebstoffreservoir mit dem Bodenelement verbunden, es wäre jedoch auch denkbar, dass das Klebstoffreservoir lediglich lose in einer Aufnahme des Bodenelements aufgenommen ist. Ein Auspressen des Klebstoffreservoirs kann insbesondere direkt über einen Stempel der Befestigungsvorrichtung erfolgen. Der Stempel kann beispielsweise an dem Befestigungsadapter und/oder der Abdeckeinheit angeordnet sein. Insbesondere ist der Stempel dazu vorgesehen, das Klebstoffreservoir bei einem Kopplungsvorgang der Befestigungsvorrichtung, insbesondere einer Befestigungskopplung des Befestigungsadapters, mit der Bodeneinheit auszupressen. Es wäre jedoch auch denkbar, dass ein Auspressen über einen separaten Mechanismus erfolgt. Dadurch kann insbesondere eine vorteilhaft einsatzbereite Befestigungsvorrichtung bereitgestellt werden. Es kann insbesondere auf ein separates Aufbringen von Klebstoff verzichtet werden. Ferner kann eine optimale Menge an Klebstoff bereitgestellt werden. Des Weiteren kann eine optimale Einbringung des Klebstoffs in einen Fügespalt bereitgestellt werden. Sämtliche Fügeteilböden können optional mit Klebereservoir, insbesondere mit Push-Klebstoffapplikationen, ausgestattet sein, sowie direkt geklebt und/oder geschraubt werden.

Des Weiteren wird vorgeschlagen, dass die Befestigungsvorrichtung einen Befestigungsfortsatz aufweist, der dazu vorgesehen ist, in eine Ausnehmung der Unterlage, insbesondere in eine Ausnehmung im WC-Sitz, eingeführt zu werden. Der Befestigungsfortsatz ist insbesondere dazu vorgesehen, in eine bestehende Befestigungsausnehmung der WC-Keramik einzugreifen. Der Befestigungsfortsatz kann auch als einteiliges oder mehrteiliges Bauteil mit der Bodeneinheit, insbesondere dem Bodenelement, verbunden sein. Mittels des Befestigungsfortsatzes können insbesondere bestehende Befestigungslöcher in der WC-Keramik verschlossen werden und eine Fügefläche vergrößert werden. Vorzugsweise wird vorgeschlagen, dass die Befestigungsvorrichtung eine Spreizeinheit aufweist, die dazu vorgesehen ist, den Befestigungsfortsatz zur Erzeugung einer Klemmkraft aufzuspreizen. Der Befestigungsfortsatz kann insbesondere von oben bedient und mittels der Spreizeinheit, welche insbesondere einen Gegenlaufkonus aufweist, mit der WC-Keramik verspannt werden. Der Befestigungsfortsatz weist insbesondere mehrere Klemmelemente auf, welche mittels des Gegenlaufkonus der Spreizeinheit nach außen verspreizt und damit verklemmt werden können. Neben der fixen Positionierung bietet der Befestigungsfortsatz eine zusätzliche Sicherung der Befestigungsvorrichtung mittels Schrauben. Dadurch kann insbesondere eine zusätzliche Sicherung der Befestigungsvorrichtung an der Unterlage bereitgestellt werden.

Des Weiteren wird vorgeschlagen, dass der Befestigungsadapter fest mit einem Gelenkbauteil, insbesondere mit einem WC-Sitzgelenk, verbunden ist. Vorzugsweise ist der Befestigungsadapter fest mit einem ersten Scharnierteil des WC-Sitzgelenks verbunden. Bevorzugt ist der Befestigungsadapter insbesondere mit dem ersten Scharnierteil des WC-Sitzgelenks verschraubt, wobei die Verschraubung insbesondere nicht zu einem Lösen vorgesehen ist. Das Gelenkbauteil ist insbesondere von einem Scharnierbauteil gebildet. Das Gelenkbauteil bildet insbesondere ein direktes funktionales Bauteil des WC-Sitzgelenks und ist insbesondere von einem reinen Befestigungsdorn, insbesondere Scharnierdorn, verschieden und besitzt eine über eine Funktion eines Befestigungsdorns hinausgehende Funktion. Unter "fest verbunden" soll in diesem Zusammenhang insbesondere eine Verbindung verstanden werden, welche frei von einer Montageschnittstelle ist und insbesondere für einen Endnutzer nicht zur Lösung vorgesehen ist. Darunter, dass zumindest ein erstes Element mit zumindest einem weiteren Element "verbunden" ist, soll insbesondere verstanden werden, dass das erste Element vorteilhaft über zumindest einen Kraftschluss und/oder zumindest einen Formschluss mit dem weiteren Element verbunden ist, beispielsweise über eine Verschraubung und/oder Vernietung und/oder Rastverbindung und/oder eine Nut-Feder-Verbindung und/oder eine Klemmverbindung und/oder eine weitere, dem Fachmann als sinnvoll erscheinende Verbindung, und/oder stoffschlüssig mit dem weiteren Element verbunden ist, beispielsweise durch einen Schweißprozess, einen Klebeprozess, einen Anspritzprozess und/oder einen anderen, dem Fachmann als sinnvoll erscheinenden Prozess. Dadurch kann insbesondere eine direkte Verbindung zwischen dem Befestigungsadapter und der Anbaueinheit bereitgestellt werden. Dadurch kann insbesondere eine einfache und schnelle Kopplung der Anbaueinheit mit der Bodeneinheit realisiert werden. Insbesondere kann die Anbaueinheit über den Befestigungsadapter direkt mit der Bodeneinheit gekoppelt werden.

Ferner geht die Erfindung aus von einem System, insbesondere einem ersten WC-Sitzgarnitursystem, mit der Befestigungsvorrichtung. Es wird vorgeschlagen, dass das System eine Anbaueinheit, wie insbesondere eine WC-Sitzgarnitur, aufweist, die dazu vorgesehen ist, mit dem Befestigungsadapter und der Bodeneinheit auf der Unterlage, insbesondere dem WC-Sitz, befestigt zu werden.

Des Weiteren geht die Erfindung aus von einem weiteren System, insbesondere einem zweiten WC-Sitzgarnitursystem, mit dem Befestigungsadapter und einer Anbaueinheit, wie insbesondere einer WC-Sitzgarnitur. Zwischen der Anbaueinheit und dem Befestigungsadapter ist insbesondere das WC-Sitzgelenk angeordnet, wobei die Anbaueinheit und der Befestigungsadapter jeweils fest mit dem WC-Sitzgelenk verbunden sind.

Zudem geht die Erfindung aus von einem Verfahren zur Herstellung der Befestigungsvorrichtung.

Ferner geht die Erfindung aus von einem Verfahren zur Montage der Befestigungsvorrichtung. Es wird vorgeschlagen, dass in zumindest einem Klebeschritt die Bodeneinheit auf eine Keramik aufgeklebt wird, wobei die Anbaueinheit nach dem Klebeschritt frei positionierbar ist.

Die erfindungsgemäße Befestigungsvorrichtung, der Befestigungsadapter, die Bodeneinheit, das System sowie das Verfahren sollen hierbei nicht auf die oben beschriebene Anwendung und Ausführungsform beschränkt sein. Insbesondere können die erfindungsgemäße Befestigungsvorrichtung, der Befestigungsadapter, die Bodeneinheit, das System sowie das Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten. Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Die Herstellung einzelner oder sämtlicher der aufgeführten Bauteile, kann aus allen metallischen oder nichtmetallischen Werkstoffen oder aus einem Mix dieser Materialien bestehen.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine als WC-Sitz ausgebildete Unterlage, eine als WC-Sitzgarnitur ausgebildete Anbaueinheit und eine erfindungsgemäße Befestigungsvorrichtung zur Befestigung der Anbaueinheit an der Unterlage in einer schematischen Darstellung während eines Montagevorgangs,
- Fig. 2: die erfindungsgemäße Befestigungsvorrichtung mit einem Befestigungsadapter, mit einer Abdeckeinheit und mit einem Gelenkbauteil in einer schematischen Darstellung,
- Fig. 3: den Befestigungsadapter und das Gelenkbauteil der erfindungsgemäßen Befestigungsvorrichtung in einer schematischen Darstellung von oben,
- Fig. 4: die Abdeckeinheit der erfindungsgemäßen Befestigungsvorrichtung in einer schematischen Darstellung von unten,
- Fig. 5: den Befestigungsadapter und das Gelenkbauteil der erfindungsgemäßen Befestigungsvorrichtung in einer schematischen Darstellung von unten,
- Fig. 6: einen Verriegelungs- und/oder Klemmmechanismus der erfindungsgemäßen Befestigungsvorrichtung mit einem Betätigungselement und mit mehreren Rastelementen in einer schematischen Darstellung von unten,
- Fig. 7: eine schematische Schnittdarstellung durch die erfindungsgemäße Befestigungsvorrichtung,
- Fig. 8: die erfindungsgemäße Befestigungsvorrichtung mit der Abdeckeinheit mit dem Befestigungsadapter, mit dem Verriegelungs- und/oder Klemmmechanismus mit einer Bodeneinheit und mit einer Positionierhilfeeinheit in einer schematischen Explosionsdarstellung,
- Fig. 9: eine alternative erfindungsgemäße Befestigungsvorrichtung mit einer Abdeckeinheit mit einem Befestigungsadapter, mit einer Bodeneinheit und mit einer Positionierhilfeeinheit in einer schematischen Explosionsdarstellung,
- Fig. 10: eine schematischen Schnittdarstellung durch die alternative erfindungsgemäße Befestigungsvorrichtung,
- Fig. 11: einen ersten Teilausschnitt der alternativen erfindungsgemäßen Befestigungsvorrichtung in einer schematischen Schnittdarstellung,
- Fig. 12: einen zweiten Teilausschnitt der alternativen erfindungsgemäßen Befestigungsvorrichtung in einer schematischen Schnittdarstellung,
- Fig. 13: eine weitere alternative erfindungsgemäße Befestigungsvorrichtung mit einer Abdeckeinheit mit einem Befestigungsadapter, mit einer Bodeneinheit und mit einem Funktionseinlagemittel in einer schematischen Explosionsdarstellung,
- Fig. 14: die Abdeckeinheit und den Befestigungsadapter der weiteren alternativen erfindungsgemäßen Befestigungsvorrichtung in einer schematischen Darstellung,
- Fig. 15: eine Bodeneinheit einer weiteren alternativen erfindungsgemäßen Befestigungsvorrichtung mit einem Befestigungsfortsatz in einer schematischen Darstellung,
- Fig. 16: eine weitere alternative erfindungsgemäße Befestigungsvorrichtung mit einer Abdeckeinheit mit einem Befestigungsadapter, mit einer Bodeneinheit und mit einer Positionierhilfeeinheit in einer schematischen Explosionsdarstellung und
- Fig. 17: eine weitere alternative erfindungsgemäße Befestigungsvorrichtung mit einem Befestigungsadapter, mit einer Bodeneinheit und mit einem Befestigungsmagneten in einer schematischen Explosionsdarstellung.

### Beschreibung der Ausführungsbeispiele

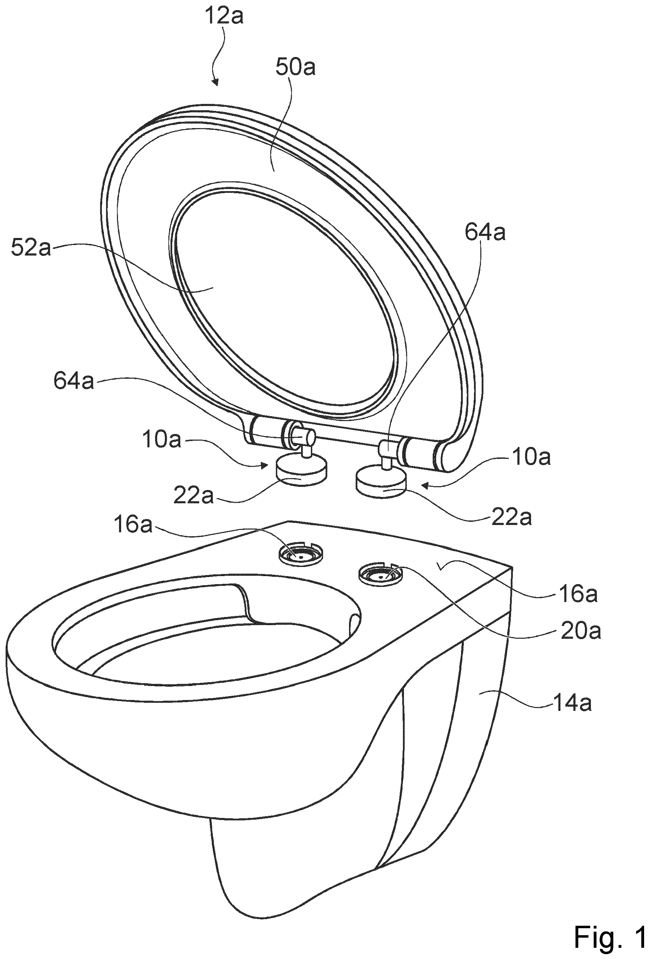

Figur 1 zeigt eine als WC-Sitz ausgebildete Unterlage 14a, eine als WC-Sitzgarnitur ausgebildete Anbaueinheit 12a und zwei identische Befestigungsvorrichtungen 10a zur Befestigung der Anbaueinheit 12a an der Unterlage 14a. Die Unterlage 14a ist von einer WC-Keramik gebildet. Es wäre jedoch auch eine andere, einem Fachmann als sinnvoll erscheinende Ausbildung der Unterlage 14a denkbar. Die Anbaueinheit 12a ist von einer WC-Sitzgarnitur gebildet. Die Anbaueinheit 12a umfasst einen Toilettensitz 50a und einen relativ zu dem Toilettensitz 50a verschwenkbaren Toilettendeckel 52a. Die Befestigungsvorrichtungen 10a sind identisch ausgebildet, sodass im Folgenden lediglich eine Befestigungsvorrichtung 10a beschrieben wird, wobei die Beschreibung jeweils auch auf die andere Befestigungsvorrichtung 10a anwendbar ist.

Die Befestigungsvorrichtung 10a ist zur Befestigung der Anbaueinheit 12a an der Unterlage 14a, insbesondere zu einer lösbaren Verbindung der Anbaueinheit 12a mit der Unterlage 14a. Die Befestigungsvorrichtung 10a ist von einer WC-Sitzbefestigungsvorrichtung gebildet. Die Befestigungsvorrichtung 10a umfasst eine Bodeneinheit 16a. Die Bodeneinheit 16a weist eine Klebefläche 18a auf und ist dazu vorgesehen, auf eine Fläche 20a der Unterlage 14a aufgeklebt zu werden. Die Bodeneinheit 16a weist ein Bodenelement 54a auf. Das Bodenelement 54a weist eine Grundplatte 56a sowie eine an der Außenkante der Grundplatte 56a umlaufende Wandung 58a auf. Die Grundplatte 56a und die Wandung 58a sind einteilig ausgebildet. Das Bodenelement 54a ist insbesondere schalenförmig. Die Wandung 58a ragt auf einer der Klebefläche 18a abgewandten Seite aus der Grundplatte 56a. Die Wandung 58a bildet eine ringförmige Wandung 58a aus. Die Grundplatte 56a ist kreisförmig. Die Grundplatte 56a weist eine zentrale Ausnehmung auf. Ferner weist die Grundplatte 56a einen Aufnahmebereich zu einer Aufnahme eines Klebereservoirs 42a auf. Die Bodeneinheit 16a weist das Klebereservoir 42a auf. Das Klebereservoir 42a ist von einem geschlossenen Reservoir zur Aufnahme eines Klebstoffs für die Klebefläche 18a gebildet. Das Klebereservoir 42a ist dazu vorgesehen, während eines Fügeprozesses teilweise zerstört zu werden, wobei ein Klebstoff über die Ausnehmung der Grundplatte 56a des Bodenelements 54a in einen Fügespalt, insbesondere zwischen der Klebefläche 18a der Bodeneinheit 16a und der Fläche 20a der Unterlage 14a, gepresst wird. Eine in dem Klebereservoir 42a aufgenommene Klebstoffmenge entspricht einer für den Fügeprozess benötigten Klebstoffmenge. Das Klebereservoir 42a ist beispielhaft von einer Klebstoffkapsel gebildet. Es wäre jedoch auch eine andere, einem Fachmann als sinnvoll erscheinende Ausbildung des Klebereservoirs 42a denkbar. Das Klebereservoir 42a ist in dem Aufnahmebereich der Grundplatte 56a aufgenommen. Ein Auspressen des Klebereservoirs 42a erfolgt nicht weiter sichtbar über einen Stempel der Befestigungsvorrichtung 10a. Die Wandung 58a des Bodenelements 54a weist eine Unterbrechung auf. Über die Unterbrechung der Wandung 58a wird insbesondere eine Relativposition eines Befestigungsadapters 22a relativ zu der Bodeneinheit 16a vorgegeben. Ferner weist die Wandung 58a auf einer Innenseite mehrere, insbesondere drei, Rastausnehmungen 60a auf. Die Rastausnehmungen 60a sind von schlitzförmigen Vertiefungen auf einer Innenseite der Wandung 58a gebildet. Die Rastausnehmungen 60a sind gleichmäßig über einen Innenumfang der Wandung 58a verteilt.

Die Bodeneinheit 16a ist mehrteilig ausgebildet. Die Bodeneinheit 16a umfasst eine Positionierhilfeeinheit 34a. Die Befestigungsvorrichtung 10a weist die Positionierhilfeeinheit 34a auf. Die Positionierhilfeeinheit 34a ist dazu vorgesehen, bei einer Montage eine Positionierung der Bodeneinheit 16a zu unterstützen. Die Positionierhilfeeinheit 34a ist zu einer vorläufigen Fixierung der Bodeneinheit 16a bei einer Montage, insbesondere vor einer Verklebung der Bodeneinheit 16a auf der Unterlage 14a, vorgesehen. Die Positionierhilfeeinheit 34a ist zu einer Positionsfixierung mit zuvor freier Beweglichkeit auf der Unterlage 14a vorgesehen. Die Positionierhilfeeinheit 34a umfasst eine Klebefläche 36a mit einem Sekundärklebstoff. Der Sekundärklebstoff unterscheidet sich von Hauptklebstoff und weist insbesondere eine geringere Klebekraft auf. Der Sekundärklebstoff ist wiederlösbar ausgebildet. Die Positionierhilfeeinheit 34a weist eine partielle oder vollflächige Klebstoffbeschichtung auf einer Fügeteilseite mit dem Sekundärklebstoff auf. Die Positionierhilfeeinheit 34a weist einen Positionierring 38a auf. Die Positionierhilfeeinheit 34a ist von einem Positionierring 38a gebildet. Die Positionierhilfeeinheit 34a ist dazu vorgesehen, das Bodenelement 54a in einem Bereich der Grundplatte 56a zu umschließen. Die Positionierhilfeeinheit 34a dient zu einer Vorfixierung. Ferner weist die Positionierhilfeeinheit 34a Drehmitnahmefortsätze 62a auf, welche die Positionierhilfeeinheit 34a in einem montierten Zustand drehfest mit dem Bodenelement 54a verbinden. Die Positionierhilfeeinheit 34a kann ferner zusätzliche Funktionen übernehmen, wie beispielsweise eine Klebstoffleit- und Begrenzungsfunktion und/oder die Fixierung weiterer Systembauteile der Befestigungsvorrichtung 10a.

Ferner weist die Befestigungsvorrichtung 10a einen Befestigungsadapter 22a auf, der zur Befestigungskopplung mit der Bodeneinheit 16a vorgesehen ist. Die Befestigungskopplung ist lösbar. Die Befestigungskopplung kann von einem Bediener werkzeuglos getrennt werden. Zwischen der Bodeneinheit 16a und dem Befestigungsadapter 22a ist eine scharnierbauteilfreie Koppelstelle ausgebildet. Die Koppelstelle ist zu einer Realisierung der Befestigungskopplung vorgesehen. Die Koppelstelle befindet sich unterhalb eines Scharniers 64a der Befestigungsvorrichtung 10a. Das Scharnier 64a dient zu einer festen, schwenkbaren Verbindung der Anbaueinheit 12a mit der Befestigungsvorrichtung 10a. Die Anbaueinheit 12a ist über das Scharnier 64a mit dem Befestigungsadapter 22a verbunden. Der Befestigungsadapter 22a ist von einem ringförmigen Bauteil gebildet, welches bei einer Montage dazu vorgesehen ist, zumindest teilweise über die Bodeneinheit 16a gestülpt zu werden. Vorzugsweise ist der Befestigungsadapter 22a in einem montierten Zustand dazu vorgesehen, die Bodeneinheit 16a vollständig aufzunehmen. Ferner weist der Befestigungsadapter 22a eine erste zentrale Ausnehmung 66a zu einer Aufnahme eines Betätigungselements 28a auf. Zudem weist der Befestigungsadapter 22a eine zweite dezentrale Ausnehmung 68a auf, welche zu einer Befestigung eines Gelenkbauteils 48a des Scharniers 64a dient. Der Befestigungsadapter 22a weist weiter eine äußere Wandung 70a auf. Die äußere Wandung 70a erstreckt sich ringförmig vollständig entlang einer äußeren Mantelfläche des Befestigungsadapters 22a. Die äußere Wandung 70a ist geschlossen ausgebildet. Ferner weist der Befestigungsadapter 22a einen innere Wandung 72a auf, welche die ringförmig zentrale, erste Ausnehmung 66a des Befestigungsadapters 22a begrenzt. Die innere Wandung 72a weist auf einer Unterseite mehrere, insbesondere drei, Vertiefungen zu einer Aufnahme und Führung von Rastelementen 76a eines Verriegelungs- und/oder Klemmmechanismus 26a der Befestigungsvorrichtung 10a auf. Des Weiteren weist der Befestigungsadapter 22a eine mittlere, sich ringförmig zwischen der inneren Wandung 72a und der äußeren Wandung 70a erstreckende Wandung 74a auf. Die mittlere Wandung 74a weist mehrere, insbesondere drei, Führungsausnehmungen 78a zu einer Aufnahme und Führung der Rastelemente 76a des Verriegelungs- und/oder Klemmmechanismus 26a der Befestigungsvorrichtung 10a auf. Die Führungsausnehmungen 78a der mittleren Wandung 74a sind zu den Rastausnehmungen 60a der umlaufenden Wandung 58a des Bodenelements 54a korrespondierend ausgebildet.

Ferner weist die Befestigungsvorrichtung 10a einen Gegenhalter 80a auf. Der Gegenhalter 80a ist zu der inneren Wandung 72a des Befestigungsadapters 22a korrespondierend ausgebildet. Der Gegenhalter 80a ist ringförmig. Ein Durchmesser des Gegenhalters 80a entspricht zumindest annähernd einem Durchmesser der inneren Wandung 72a. Der Gegenhalter 80a weist auf einer Oberseite mehrere, insbesondere drei, Vertiefungen zu einer Aufnahme und Führung von den Rastelementen 76a des Verriegelungs- und/oder Klemmmechanismus 26a der Befestigungsvorrichtung 10a auf. Die Vertiefungen des Gegenhalters 80a sind zu den Vertiefungen der inneren Wandung 72a korrespondierend ausgebildet. Die Vertiefungen bilden gemeinsam eine Durchgangsausnehmung zu einem Halten und Führen der Rastelemente 76a.

Des Weiteren weist die Befestigungsvorrichtung 10a den Verriegelungs- und/oder Klemmmechanismus 26a auf, über den die Bodeneinheit 16a und der Befestigungsadapter 22a im befestigten Zustand gekoppelt sind. Der Verriegelungs- und/oder Klemmmechanismus 26a ist als Rastmechanismus ausgebildet ist. Der Verriegelungs- und/oder Klemmmechanismus 26a ist an dem Befestigungsadapter 22a angeordnet, es wäre jedoch auch denkbar, dass der Verriegelungs- und/oder Klemmmechanismus 26a zumindest teilweise an der Bodeneinheit 16a angeordnet ist. Der Verriegelungs- und/oder Klemmmechanismus 26a ist zu einer axialen Sicherung des Befestigungsadapters 22a an der Bodeneinheit 16a vorgesehen. Der Verriegelungs- und/oder Klemmmechanismus 26a ist lösbar ausgebildet, insbesondere zu einer nachträglichen Trennung des Befestigungsadapters 22a von der Bodeneinheit 16a. Insbesondere ist der Befestigungsadapter 22a beispielsweise zu einer Montage, einer Reinigung und/oder zu einem Austausch der Anbaueinheit 12a von der Bodeneinheit 16a trennbar.

Der Verriegelungs- und/oder Klemmmechanismus 26a weist mehrere Rastelemente 76a auf. Der Verriegelungs- und/oder Klemmmechanismus 26a weist beispielhaft genau drei Rastelemente 76a auf. Die Rastelemente 76a sind in den Vertiefungen des Gegenhalters 80a und den Vertiefungen der inneren Wandung 72a sowie in den Führungsausnehmungen 78a der mittleren Wandung 74a geführt und verliersicher gehalten. Die Rastelemente 76a sind jeweils einteilig ausgebildet. Die Rastelemente 76a weisen jeweils ein innenliegendes Kulissenelement 82a auf. Ferner weisen die Rastelemente 76a jeweils einen mit dem Kulissenelement 82a verbundenen Führungssteg 84a auf, welcher in den Vertiefungen des Gegenhalters 80a und den Vertiefungen der inneren Wandung 72a geführt ist. An einem dem Kulissenelement 82a abgewandten Ende des Führungsstegs 84a weisen die Rastelemente 76a jeweils einen bogenförmigen Rastfortsatz 86a auf, welcher in einem Rastzustand dazu vorgesehen ist, in jeweils eine der Rastausnehmungen 60a des Bodenelements 54a einzugreifen. Ferner sind die Rastfortsätze 86a zumindest teilweise in den Führungsausnehmungen 78a der mittleren Wandung 74a geführt. Des Weiteren weisen die Rastelemente 76a jeweils an den Rastfortsätzen 86a angeordnete Federarme 88a auf, welche dazu vorgesehen sind, die Rastelemente 76a in einem unbelasteten Zustand in eine Raststellung zu bewegen. Die Federarme 88a stützen sich an einem Betätigungselement 28a ab. Die Rastelemente 76a sind über den Gegenhalter 80a unverlierbar mit dem Befestigungsadapter 22a verbunden. Der Gegenhalter 80a ist nicht weiter sichtbar fest mit dem Befestigungsadapter 22a verbunden.

Der Verriegelungs- und/oder Klemmmechanismus 26a weist das Betätigungselement 28a auf. Das Betätigungselement 28a ist von einem Druckknopf gebildet. Das Betätigungselement 28a weist eine kreiszylindrische Grundform auf. Das Betätigungselement 28a ist dazu vorgesehen, eine Rastverbindung des Rast- und Klemmmechanismus 26a zu lösen. Das Betätigungselement 28a weist auf einer Rückseite drei Kulissenführungsausnehmungen 90a auf. Die Kulissenführungsausnehmungen 90a begrenzen Rampen des Betätigungselements 28a, an welchen die Kulissenelemente 82a der Rastelemente 76a geführt sind. Die Rampen sind derart geformt, dass die Rastelemente 76a bei einer Betätigung des Betätigungselements 28a über die Kulissenelemente 82a radial nach innen gezogen werden. Die Rastelemente 76a werden bei einer Betätigung des Betätigungselements 28a aus einer Raststellung in eine Lösestellung gebracht. Die Rastelemente 76a sind in einem montierten Zustand des Befestigungsadapters 22a in der Lösestellung außer Eingriff mit den Rastausnehmungen 60a des Bodenelements 54a. Es ist denkbar, dass an dem Betätigungselement 28a ein Stempel zu einem Auspressen des Klebereservoirs 42a angeordnet ist, sodass das Klebereservoir 42a bei einem ersten Betätigen des Betätigungselements 28a ausgepresst wird.

Ferner weist die Befestigungsvorrichtung 10a eine Abdeckeinheit 30a auf, die neben einer Abdeckfunktion eine Systemfunktion aufweist. Die Abdeckeinheit 30a ist von einer Gummiabdeckung gebildet. Die Abdeckeinheit 30a ist lösbar mit dem Befestigungsadapter 22a verbunden. Die Abdeckeinheit 30a weist auf einer Unterseite einen Klemmring 92a auf, welcher dazu vorgesehen ist, in einer Nut 94a auf einer Oberseite des Befestigungsadapters 22a zu verrasten. Die Abdeckeinheit 30a ist dazu vorgesehen, den Verriegelungs- und/oder Klemmmechanismus 26a vor einem Eintritt von Schmutz zu schützen. Zudem ist denkbar, dass die Abdeckeinheit 30a zumindest teilweise aus einer Weichkomponente gefertigt ist und das Betätigungselement 28a durch die Abdeckeinheit 30a betätigt werden kann

Der Befestigungsadapter 22a ist fest mit einem Gelenkbauteil 48a des Scharniers 64a verbunden. Der Befestigungsadapter 22a ist über die zweite dezentrale Ausnehmung 68a mit dem Gelenkbauteil 48a des Scharniers 64a verbunden. Das Gelenkbauteil 48a ist beispielhaft von einem abgewinkelten Gelenkzapfen gebildet, welcher wiederum nicht weiter sichtbar unlösbar mit einem weiteren Gelenkbauteil des Scharniers 64a verbunden ist. Das Gelenkbauteil 48a ist beispielsweise über eine Schraubverbindung mit dem Befestigungsadapter 22a verbunden. Die Verbindung zwischen dem Gelenkbauteil 48a und dem Befestigungsadapter 22a ist für einen Endnutzer nicht zur Lösung vorgesehen. Das Gelenkbauteil 48a ist über weitere Gelenkbauteile des Scharniers 64a unlösbar mit der Anbaueinheit 12a verbunden.

Die Befestigungsvorrichtung 10a und die Anbaueinheit 12a bilden ein System, insbesondere ein erstes WC- Sitzgarnitursystem.

Ferner bilden der Befestigungsadapter 22a, das Scharnier 64a und die Anbaueinheit 12a ein weiteres System, insbesondere ein zweites WC-Sitzgarnitursystem.

Ferner wird ein Verfahren zur Montage der Befestigungsvorrichtung 10a offenbart. Bei dem Verfahren wird die Befestigungsvorrichtung 10a zusammen mit der Anbaueinheit 12a an der Unterlage 14a abgebracht. Das Verfahren umfasst einen Ausrichtungsschritt. Bei dem Ausrichtungsschritt wird die Bodeneinheit 16a auf der Fläche 20a der Unterlage 14a ausgerichtet und anschließend mittels der Positionierhilfeeinheit 34a vorfixiert. Die Ausrichtung kann sowohl mit dem Befestigungsadapter 22a und der Anbaueinheit 12a erfolgen, oder ohne diese, beispielsweise mittels einer Schablone. Anschließend folgt ein Klebeschritt. In dem Klebeschritt wird der Befestigungsadapter 22a auf die Bodeneinheit 16a aufgesetzt und das Klebereservoir 42a durch Drücken des Betätigungselements 28a ausgepresst. Es wäre auch denkbar, dass der Klebeschritt ohne den Befestigungsadapter 22a erfolgt, wobei das Klebereservoir 42a durch einen separaten Stempel ausgebracht wird, oder manuell Klebstoff in den Fügespalt eingebracht wird. In dem Klebeschritt wird die Bodeneinheit 16a auf die Unterlage 14a aufgeklebt. Die Anbaueinheit 12a ist nach dem Klebeschritt frei positionierbar.

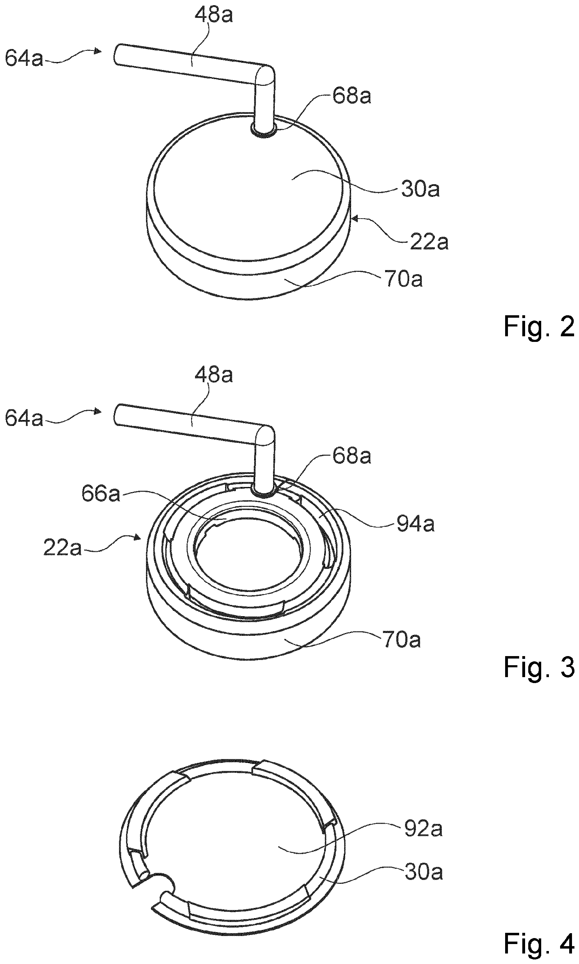

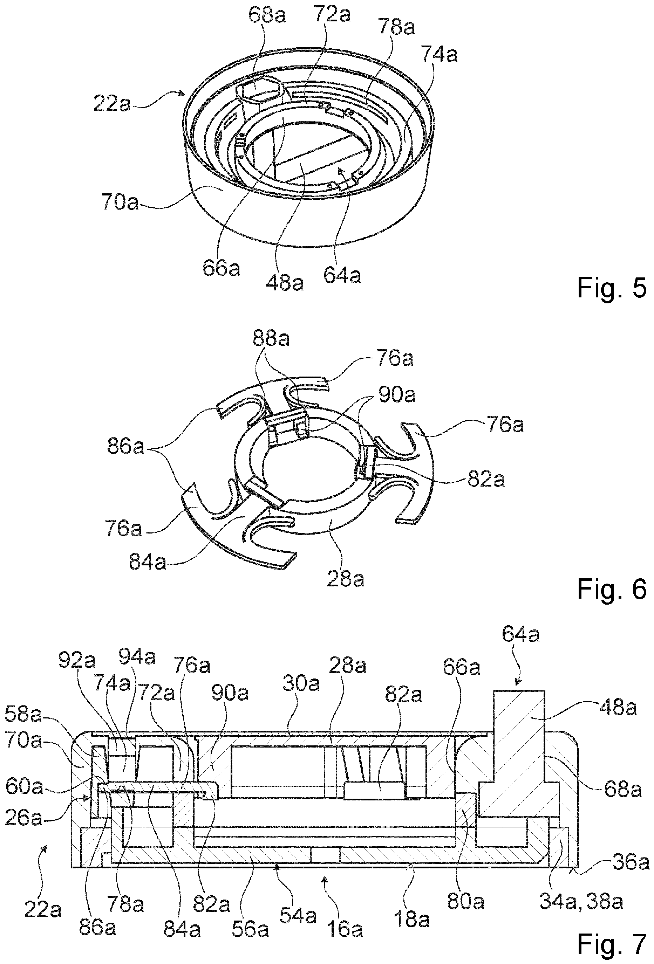

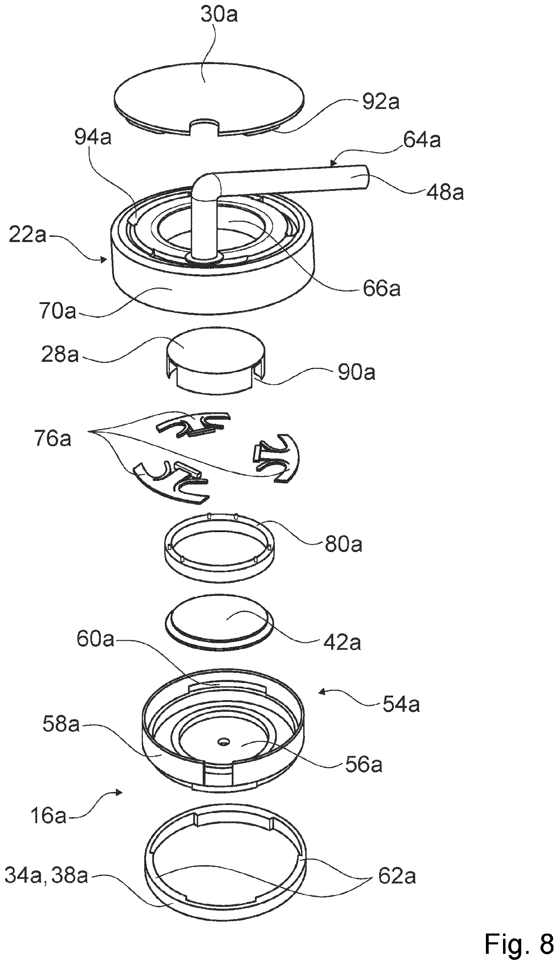

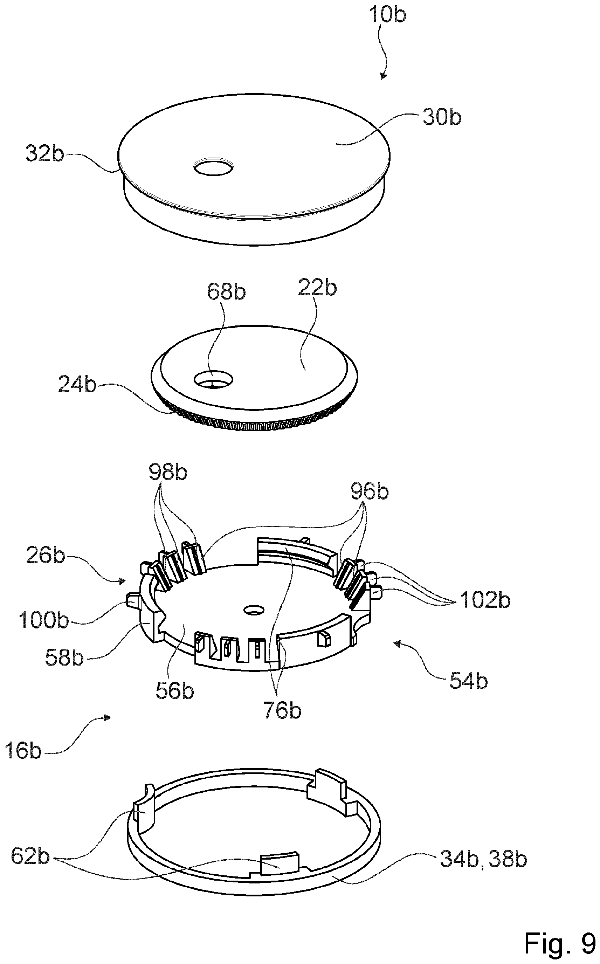

In den Figuren 9 bis 17 sind fünf weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 8, verwiesen werden kann. Zur Unterscheidung der Ausführungsbeispiele ist der Buchstabe a in den Bezugszeichen des Ausführungsbeispiels der Figuren 1 bis 8 durch die Buchstaben b bis f in den Bezugszeichen der Ausführungsbeispiele der Figuren 9 bis 17 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 8, verwiesen werden.

Figur 9 zeigt eine Befestigungsvorrichtung 10b mit einer Abdeckeinheit 30b mit einem Befestigungsadapter 22b, mit einer Bodeneinheit 16b und mit einer Positionierhilfeeinheit 34b in einer schematischen Explosionsdarstellung.

Die Bodeneinheit 16b weist ein Bodenelement 54b auf. Das Bodenelement 54b weist eine Grundplatte 56b sowie mehrere an der Außenkante der Grundplatte 56b verlaufende Wandsegmente einer Wandung 58b auf. Ferner weist das Bodenelement 54b mehrere an der Außenkante der Grundplatte 56b angeordnete Verdrehsicherungfortsätze 96b auf. Die Grundplatte 56b, die Wandung 58b und die Verdrehsicherungfortsätze 96b sind einteilig ausgebildet. Das Bodenelement 54b ist insbesondere zumindest annähernd schalenförmig. Die Wandung 58b ragt auf einer einer Klebefläche abgewandten Seite aus der Grundplatte 56b. Die Wandung 58b bildet zusammen mit den Verdrehsicherungfortsätzen 96b eine annähernd ringförmige Wandung aus. In Umfangsrichtung folgen an der Außenkante der Grundplatte 56b beispielhaft jeweils drei Verdrehsicherungfortsätze 96b auf ein Wandsegment der Wandung 58b, wobei beispielhaft drei Wandsegmente und neun Verdrehsicherungfortsätze 96b vorgesehen sind. Die Grundplatte 56b ist kreisförmig. Die Grundplatte 56b weist eine zentrale Ausnehmung auf. Ferner weist die Grundplatte 56b einen Aufnahmebereich zu einer Aufnahme eines Klebereservoirs auf.

Die Bodeneinheit 16b ist mehrteilig ausgebildet. Die Bodeneinheit 16b umfasst eine Positionierhilfeeinheit 34b. Die Befestigungsvorrichtung 10b weist die Positionierhilfeeinheit 34b auf. Die Positionierhilfeeinheit 34b ist dazu vorgesehen, bei einer Montage eine Positionierung der Bodeneinheit 16b zu unterstützen. Die Positionierhilfeeinheit 34b dient zu einer Vorfixierung. Ferner weist die Positionierhilfeeinheit 34b Drehmitnahmefortsätze 62b auf, welche die Positionierhilfeeinheit 34b in einem montierten Zustand drehfest mit dem Bodenelement 54b verbinden.

Ferner weist die Befestigungsvorrichtung 10b einen Befestigungsadapter 22b auf, der zur Befestigungskopplung mit der Bodeneinheit 16b vorgesehen ist. Die Befestigungskopplung ist lösbar. Die Befestigungskopplung kann von einem Bediener werkzeuglos getrennt werden. Zwischen der Bodeneinheit 16b und dem Befestigungsadapter 22b ist eine scharnierbauteilfreie Koppelstelle ausgebildet.

Der Befestigungsadapter 22b ist von einem plattenförmigen Bauteil gebildet, welches bei einer Montage dazu vorgesehen ist, in einen Aufnahmebereich der Bodeneinheit 16b eingelegt zu werden, der von der Wandung 58b und der Grundplatte 56b begrenzt ist. Der Befestigungsadapter 22b weist eine dezentrale Ausnehmung 68b auf, welche zu einer Befestigung eines Gelenkbauteils 48b eines Scharniers 64b dient.

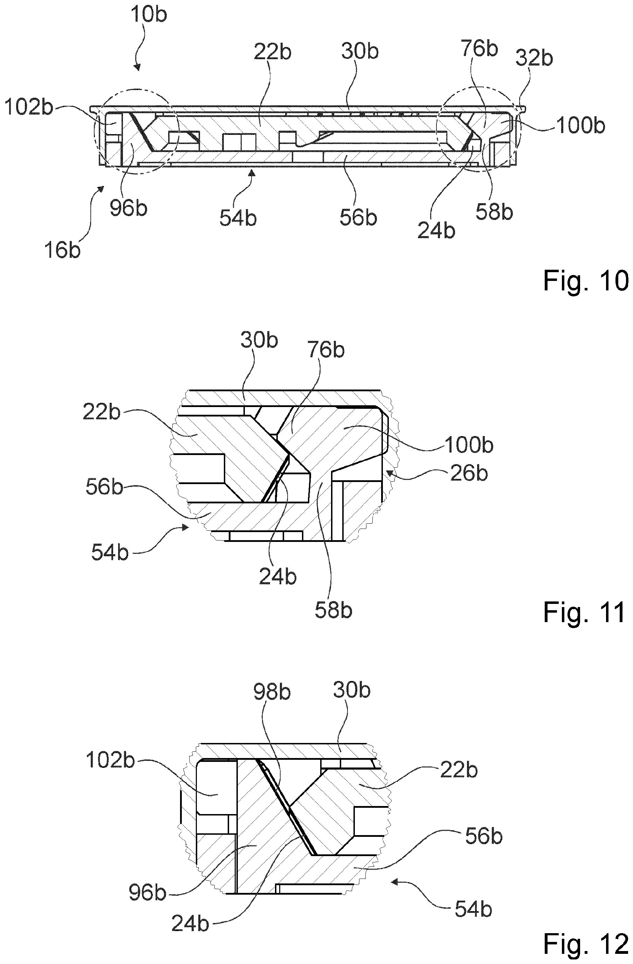

Der Befestigungsadapter 22b ist relativ zur Bodeneinheit 16b gezielt zur Einstellung in unterschiedlichen Positionen fixierbar. Der Befestigungsadapter 22b ist in verschiedenen Verdrehpositionen relativ zur Bodeneinheit 16b mit der Bodeneinheit 16b koppelbar. Eine Verdrehposition des Befestigungsadapters 22b ist in mehreren definierten Winkellagen relativ zu der Bodeneinheit 16b einstellbar. Die Befestigungsvorrichtung 10b weist eine Verzahnungsstruktur 24b auf, über die die Bodeneinheit 16b und der Befestigungsadapter 22b im befestigten Zustand gekoppelt sind. Die Verzahnungsstruktur 24b ist an einer Außenkante des Befestigungsadapters 22b angeordnet. Die Verzahnungsstruktur 24b ist nach unten hin konisch zulaufend ausgebildet. Die Verzahnungsstruktur 24b ist umlaufend. Die Verzahnungsstruktur 24b ist dazu vorgesehen, mit den Verdrehsicherungfortsätze 96b zu einer Verdrehsicherung zusammenzuwirken. Die Verdrehsicherungfortsätze 96b weisen dazu jeweils einen zu der Verzahnungsstruktur 24b korrespondierenden Steg 98b auf, welcher zu einem Eingriff in die Verzahnungsstruktur 24b vorgesehen ist. Die Stege 98b verlaufen im Wesentlichen vertikal auf einer schrägen Fläche der Verdrehsicherungfortsätze 96b. Die Verdrehsicherungfortsätze 96b weisen in einer vertikalen Querschnittsebene, welche durch einen Mittelpunkt des Bodenelements 54b verläuft, einen dreieckigen Querschnitt auf, wobei der Steg 98b jeweils auf einer der Innenseite des Bodenelements 54b zugewandten Seite angeordnet ist. Der Befestigungsadapter 22b ist in einem vollständig in das Bodenelement 54b eingelegten Zustand verdrehgesichert, wobei insbesondere denkbar wäre, dass ein Verdrehen in diesem Zustand durch ein Auslenken der Verdrehsicherungfortsätze 96b radial nach außen weiterhin möglich ist (Figur 10, 12).

Des Weiteren weist die Befestigungsvorrichtung 10b einen Verriegelungs- und/oder Klemmmechanismus 26b auf, über den die Bodeneinheit 16b und der Befestigungsadapter 22b im befestigten Zustand gekoppelt sind. Der Verriegelungs- und/oder Klemmmechanismus 26b ist als Rastmechanismus ausgebildet. Der Verriegelungs- und/oder Klemmmechanismus 26b ist an dem Bodenelement 54b angeordnet, es wäre jedoch auch denkbar, dass der Verriegelungs- und/oder Klemmmechanismus 26b zumindest teilweise an dem Befestigungsadapter 22b angeordnet ist. Der Verriegelungs- und/oder Klemmmechanismus 26b weist beispielhaft genau drei Rastelemente 76b auf. Die Rastelemente 76b sind von Raststegen auf einer der Innenseite des Bodenelements 54b zugewandten Seite der Wandsegmente der Wandung 58b gebildet. Die Rastelemente 76b sind einstückig mit den Wandsegmenten der Wandung 58b ausgebildet und ragen nach innen. Die Rastelemente 76b sind in einem montierten Zustand des Befestigungsadapters 22b dazu vorgesehen, eine Oberkante des Befestigungsadapters 22b zu hintergreifen (Figur 10, 11). Bei einem Einsetzen des Befestigungsadapters 22b in das Bodenelement 54b werden die Wandsegmente mit den Rastelementen 76b durch den Befestigungsadapter 22b elastisch radial nach außen ausgelenkt, wobei die Rastelemente 76b anschließend hinter dem Befestigungsadapter 22b einrasten. Ein Entfernen des Befestigungsadapters 22b ist ohne die Abdeckeinheit 30b möglich, indem der Befestigungsadapter 22b nach oben abgezogen wird und die Wandsegmente mit den Rastelementen 76b durch den Befestigungsadapter 22b elastisch radial nach außen ausgelenkt werden.

Ferner weist die Befestigungsvorrichtung 10b die Abdeckeinheit 30b auf, die neben einer Abdeckfunktion eine Systemfunktion aufweist. Die Abdeckeinheit 30b ist von einer Rosette gebildet. Die Abdeckeinheit 30b ist dazu vorgesehen, über den Befestigungsadapter 22b und die Bodeneinheit 16b gestülpt zu werden. Die Abdeckeinheit 30b weist eine kreiszylindrische Grundform auf. Die Abdeckeinheit 30b bildet einen Aufnahmebereich für den Befestigungsadapter 22b und die Bodeneinheit 16b aus. Die Abdeckeinheit 30b weist eine Verriegelungsfunktion zur Kopplung der Bodeneinheit 16b und des Befestigungsadapters 22b auf. Die Abdeckeinheit 30b in ihrem Design so ausgelegt, dass sie Verriegelungsfunktionen des Befestigungsadapters 22b an der Bodeneinheit 16b übernimmt. Die Abdeckeinheit 30b ist bei einem Aufsetzen in eine Montageposition dazu vorgesehen, den Verriegelungs- und/oder Klemmmechanismus 26b in der Rastposition zu sichern. Die Wandsegmente der Wandung 58b und die Verdrehsicherungfortsätze 96b weisen dazu jeweils an einer Außenseite Abstützfortsätze 100b, 102b auf, welche dazu vorgesehen sind, sich in einer Montageposition der Abdeckeinheit 30b innen an der Abdeckeinheit 30b abzustützen. Die Abstützfortsätze 100b, 102b verhindern im Zusammenspiel mit der Abdeckeinheit 30b ein radiales Auslenken der Rastelemente 76b und der Verdrehsicherungfortsätze 96b nach außen. Hierdurch kann ein Lösen und ein Verdrehen des Befestigungsadapters 22b verhindert werden. Ferner kann die Abdeckeinheit 30b eine Positionierfunktion aufweisen. Die Abdeckeinheit 30b kann insbesondere zu einer Positionierung der Positionierhilfeeinheit 34b dienen. Die Abdeckeinheit 30b kann die Betätigung und Platzierung der Positionierhilfeeinheit 34b zu der Unterlage 14b übernehmen.

Des Weiteren weist die Abdeckeinheit 30b einen Grifffortsatz 32b für einen Abziehvorgang auf. Der Grifffortsatz 32b ist von einem Bund an der Außengeometrie der Abdeckeinheit 30b gebildet.

Durch ein Abheben der Abdeckeinheit 30b kann so insbesondere ein nachträgliches Lösen des Befestigungsadapters 22b von der Bodeneinheit 16b realisiert werden.

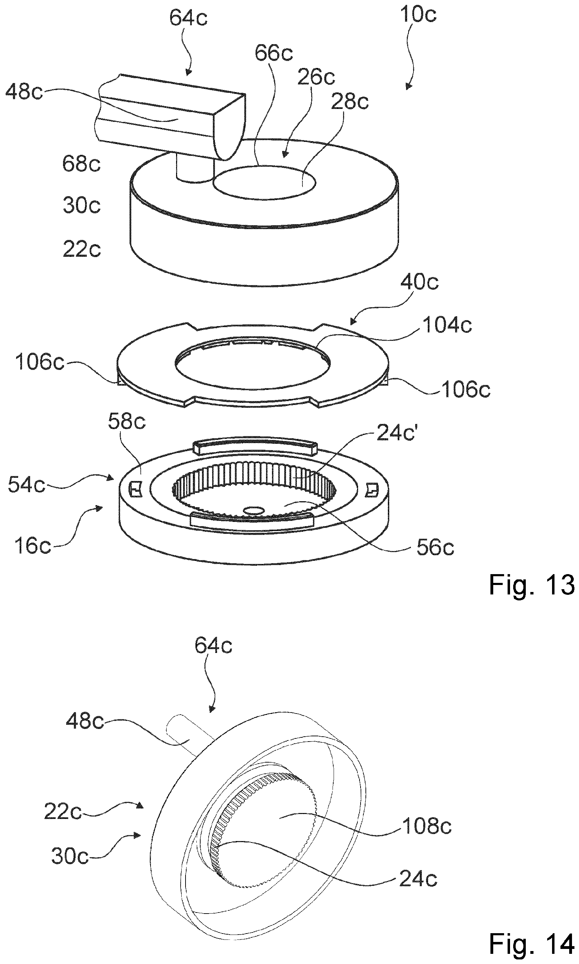

Figur 13 zeigt eine Befestigungsvorrichtung 10c mit einer Abdeckeinheit 30c mit einem Befestigungsadapter 22c, mit einer Bodeneinheit 16c und mit einem Funktionseinlagemittel 40c in einer schematischen Explosionsdarstellung.

Die Bodeneinheit 16c weist eine Klebefläche auf und ist dazu vorgesehen, auf eine Fläche 20c einer Unterlage 14c aufgeklebt zu werden. Die Bodeneinheit 16c weist ein Bodenelement 54c auf. Das Bodenelement 54c weist eine Grundplatte 56c sowie eine an der Außenkante der Grundplatte 56c umlaufende Wandung 58c auf. Die Grundplatte 56c und die Wandung 58c sind einteilig ausgebildet. Das Bodenelement 54c ist insbesondere schalenförmig. Die Wandung 58c ragt auf einer der Klebefläche 18c abgewandten Seite aus der Grundplatte 56c. Die Wandung 58c bildet eine ringförmige Wandung 58c aus. Die Grundplatte 56c ist kreisförmig. Die Grundplatte 56c weist eine zentrale Ausnehmung auf. Ferner weist die Grundplatte 56c einen Aufnahmebereich zu einer Aufnahme eines Klebereservoirs auf.

Ferner weist die Befestigungsvorrichtung 10c einen Befestigungsadapter 22c auf, der zur Befestigungskopplung mit der Bodeneinheit 16c vorgesehen ist. Die Befestigungskopplung ist lösbar. Die Befestigungskopplung kann von einem Bediener werkzeuglos getrennt werden. Der Befestigungsadapter 22c ist von einem ringförmigen Bauteil gebildet, welches bei einer Montage dazu vorgesehen ist, zumindest teilweise über die Bodeneinheit 16c gestülpt zu werden. Vorzugsweise ist der Befestigungsadapter 22c in einem montierten Zustand dazu vorgesehen, die Bodeneinheit 16c vollständig aufzunehmen. Ferner weist der Befestigungsadapter 22c eine erste zentrale Ausnehmung 66c zu einer Aufnahme eines Betätigungselements 28c auf. Zudem weist der Befestigungsadapter 22c eine zweite dezentrale Ausnehmung 68c auf, welche zu einer Befestigung eines Gelenkbauteils 48c eines Scharniers 64c dient.

Des Weiteren weist die Befestigungsvorrichtung 10c einen Verriegelungs- und/oder Klemmmechanismus 26c auf, über den die Bodeneinheit 16c und der Befestigungsadapter 22c im befestigten Zustand gekoppelt sind. Der Verriegelungs- und/oder Klemmmechanismus 26c ist als Rastmechanismus ausgebildet ist. Der Verriegelungs- und/oder Klemmmechanismus 26c weist das Betätigungselement 28c auf.

Ferner weist die Befestigungsvorrichtung 10c die Abdeckeinheit 30c auf, die neben einer Abdeckfunktion eine Systemfunktion aufweist. Die Abdeckeinheit 30c ist einstückig mit dem Befestigungsadapter 22c ausgebildet.

Der Befestigungsadapter 22c ist relativ zur Bodeneinheit 16c gezielt zur Einstellung in unterschiedlichen Positionen fixierbar. Der Befestigungsadapter 22c ist in verschiedenen Verdrehpositionen relativ zur Bodeneinheit 16c mit der Bodeneinheit 16c koppelbar. Eine Verdrehposition des Befestigungsadapters 22c ist in mehreren definierten Winkellagen relativ zu der Bodeneinheit 16c einstellbar. Die Befestigungsvorrichtung 10c weist eine Verzahnungsstruktur 24c, 24c' auf, über die die Bodeneinheit 16c und der Befestigungsadapter 22c im befestigten Zustand gekoppelt sind. Die Verzahnungsstruktur 24c, 24c' ist mehrteilig ausgebildet. Der Befestigungsadapter 22c weist einen inneren Zylinderfortsatz 108c auf, an welchem eine erste Verzahnungsstruktur 24c angeordnet ist (Figur 14). Ferner ist eine zweite Verzahnungsstrukur 24c' auf einer Innenseite der Wandung 58c angeordnet. Die erste Verzahnungsstruktur 24c und die zweite Verzahnungsstruktur 24c' wirken zu einer Verdrehsicherung zwischen der Bodeneinheit 16c und dem Befestigungsadapter 22c zusammen.

Die Befestigungsvorrichtung 10c weist ferner ein Funktionseinlagemittel 40c auf, das zu einer Einstell- und Lagerfunktion eine Ergänzungsfunktion aufweist. Das Funktionseinlagemittel 40c ist als Blockierelement ausgebildet. Das Funktionseinlagemittel 40c ist dazu vorgesehen, eine Lösbarkeit des Befestigungsadapters 22c von der Bodeneinheit 16c zu blockieren. Das Funktionseinlagemittel 40c kann hierzu dazu vorgesehen sein, eine Betätigungsfunktion des Betätigungselements 28c zu unterbinden. Das Funktionseinlagemittel 40c ist ringförmig ausgebildet und weist eine zentrale Ausnehmung 104c auf. Ferner weist das Funktionseinlagemittel 40c auf einer Unterseite Rastfortsätze 106c auf, welche dazu vorgesehen sind, insbesondere zerstörungsfrei unlösbar, in Ausnehmungen des Bodenelements 54c einzurasten. Ferner ist der Zylinderfortsatz 108c dazu vorgesehen, bei einer Kopplung des Befestigungsadapters 22c mit der Bodeneinheit 16c unlösbar in die Ausnehmung 104c des Funktionseinlagemittels 40c einzurasten. Hierbei wäre insbesondere auch denkbar, dass die Befestigungsvorrichtung 10c frei von einem Betätigungselement 28c ist. Und der Verriegelungs- und/oder Klemmmechanismus 26c lediglich über das Funktionseinlagemittel 40c realisiert ist.

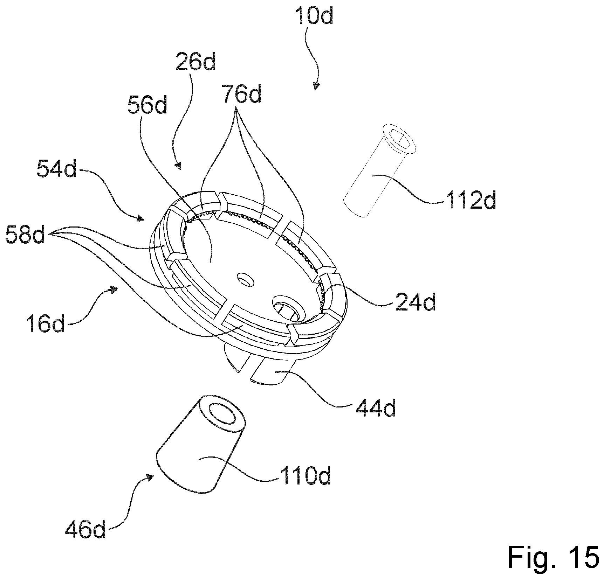

Figur 15 zeigt eine Bodeneinheit 16d einer Befestigungsvorrichtung 10d mit einem Befestigungsfortsatz 44d.

Die Bodeneinheit 16d weist ein Bodenelement 54d auf. Das Bodenelement 54d weist eine Grundplatte 56d sowie mehrere an der Außenkante der Grundplatte 56d verlaufende Wandsegmente einer Wandung 58d auf. Die Grundplatte 56d und die Wandung 58d sind einteilig ausgebildet. Das Bodenelement 54d ist insbesondere zumindest annähernd schalenförmig. Die Wandung 58d ragt auf einer einer Klebefläche abgewandten Seite aus der Grundplatte 56d. Die Wandsegmente der Wandung 58d bilden eine annähernd ringförmige Wandung aus. Die Grundplatte 56d ist kreisförmig. Die Grundplatte 56d weist eine zentrale Ausnehmung auf. Ferner weist die Grundplatte 56d einen Aufnahmebereich zu einer Aufnahme eines Klebereservoirs auf. Die Bodeneinheit 16d ist mehrteilig ausgebildet.

Die Befestigungsvorrichtung 10d weist ferner einen Befestigungsfortsatz 44d auf, der dazu vorgesehen ist, in eine Ausnehmung einer Unterlage, insbesondere in eine Ausnehmung im WC-Sitz, eingeführt zu werden. Der Befestigungsfortsatz 44d bildet ein Teil der Bodeneinheit 16d. Der Befestigungsfortsatz 44d ist dazu vorgesehen, in eine bestehende Befestigungsausnehmung der Unterlage, insbesondere einer WC-Keramik, einzugreifen. Mittels des Befestigungsfortsatzes 44d können bestehende Befestigungslöcher in der Unterlage verschlossen werden und eine Fügefläche vergrößert werden. Die Befestigungsvorrichtung 10d weist eine Spreizeinheit 46d auf, die dazu vorgesehen ist, den Befestigungsfortsatz 44d zur Erzeugung einer Klemmkraft aufzuspreizen. Der Befestigungsfortsatz 44d kann von oben bedient und mittels der Spreizeinheit 46d verspannt werden. Die Spreizeinheit 46d weist einen in dem Befestigungsfortsatz 44d angeordneten Gegenlaufkonus 110d auf, welcher mittels einer Spannschraube 112d der Spreizeinheit 46d in einer axialen Position verstellt werden kann. Der Befestigungsfortsatz 44d besteht aus mehreren Klemmelementen, welche mittels des Gegenlaufkonus 110d der Spreizeinheit 46d nach außen verspreizt und damit verklemmt werden können.

Ferner weist die Befestigungsvorrichtung 10d einen nicht weiter dargestellten Befestigungsadapter auf, der zur Befestigungskopplung mit der Bodeneinheit 16d vorgesehen ist. Die Befestigungskopplung ist lösbar.

Des Weiteren weist die Befestigungsvorrichtung 10d einen Verriegelungs- und/oder Klemmmechanismus 26d auf, über den die Bodeneinheit 16d und der Befestigungsadapter 22d im befestigten Zustand gekoppelt sind. Der Verriegelungs- und/oder Klemmmechanismus 26d ist als Rastmechanismus ausgebildet ist. Der Verriegelungs- und/oder Klemmmechanismus 26d ist an dem Bodenelement 54d angeordnet, es wäre jedoch auch denkbar, dass der Verriegelungs- und/oder Klemmmechanismus 26d zumindest teilweise an dem Befestigungsadapter 22d angeordnet ist. Der Verriegelungs- und/oder Klemmmechanismus 26d weist mehrere Rastelemente 76d auf. Die Rastelemente 76d sind von Raststegen auf einer der Innenseite des Bodenelements 54d zugewandten Seite der Wandsegmente der Wandung 58d gebildet. Die Rastelemente 76d sind einstückig mit den Wandsegmenten der Wandung 58d ausgebildet und ragen nach innen. Die Rastelemente 76d sind in einem montierten Zustand des Befestigungsadapters 22d dazu vorgesehen, eine Oberkante des Befestigungsadapters 22d zu hintergreifen.

Der Befestigungsadapter ist relativ zur Bodeneinheit 16d gezielt zur Einstellung in unterschiedlichen Positionen fixierbar. Der Befestigungsadapter 22d ist in verschiedenen Verdrehpositionen relativ zur Bodeneinheit 16d mit der Bodeneinheit 16d koppelbar. Eine Verdrehposition des Befestigungsadapters 22d ist in mehreren definierten Winkellagen relativ zu der Bodeneinheit 16d einstellbar. Die Befestigungsvorrichtung 10d weist eine Verzahnungsstruktur 24d auf, über die die Bodeneinheit 16d und der Befestigungsadapter 22d im befestigten Zustand gekoppelt sind. Die Verzahnungsstruktur 24d ist mehrteilig ausgebildet. Ein erster Teil der Verzahnungsstruktur 24d ist an einer Außenkante des Befestigungsadapters 22d angeordnet. Ferner ist ein zweiter Teil der Verzahnungsstruktur 24d an den Rastelementen 76d angeordnet. Die Verzahnungsstruktur 24d ist dazu vorgesehen, zu einer Verdrehsicherung zusammenzuwirken. Mit einer Verrastung der Rastelemente 76d erfolgt gleichzeitig eine Verdrehsicherung. Die Rastelemente 76d rasten in den ersten Teil der Verzahnungsstruktur 24d an der Außenkante des Befestigungsadapters 22d ein.

Ferner weist die Befestigungsvorrichtung 10d eine nicht weiter dargestellte Abdeckeinheit auf. Die Abdeckeinheit ist bei einem Aufsetzen in eine Montageposition dazu vorgesehen, den Verriegelungs- und/oder Klemmmechanismus 26d in der Rastposition zu sichern. Die Wandsegmente der Wandung 58d weisen dazu jeweils an einer Außenseite Abstützfortsätze 100d auf, welche dazu vorgesehen sind, sich in einer Montageposition der Abdeckeinheit innen an der Abdeckeinheit abzustützen. Die Abstützfortsätze 100d verhindern im Zusammenspiel mit der Abdeckeinheit ein radiales Auslenken der Rastelemente 76d nach außen.

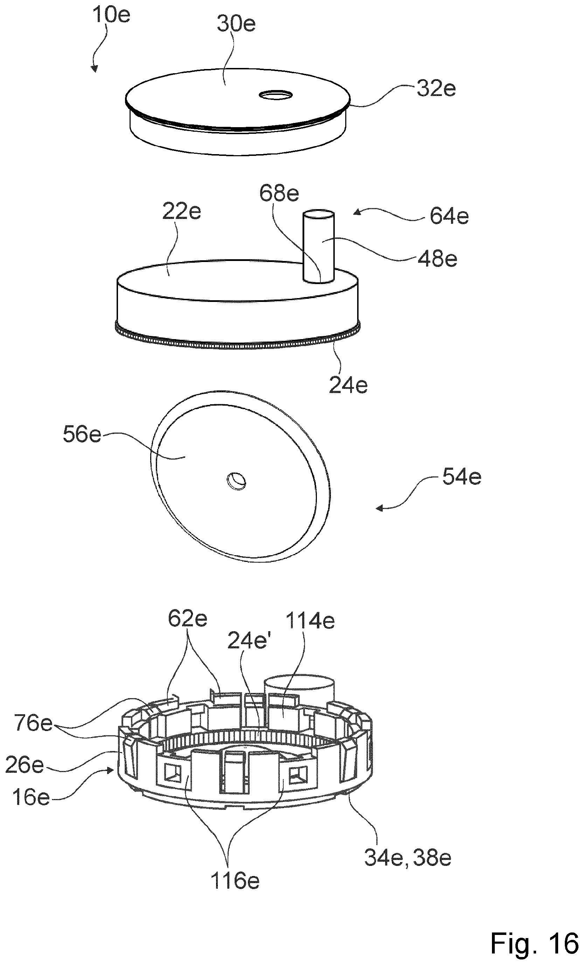

Figur 16 zeigt eine Befestigungsvorrichtung 10e mit einer Abdeckeinheit 30e mit einem Befestigungsadapter 22e, mit einer Bodeneinheit 16e und mit einer Positionierhilfeeinheit 34e in einer schematischen Explosionsdarstellung.

Die Bodeneinheit 16e weist ein Bodenelement 54e auf. Das Bodenelement 54e ist mehrteilig ausgebildet. Das Bodenelement 54e weist eine Grundplatte 56e auf. Die Grundplatte 56e ist von einem Fügeteilboden gebildet. Die Grundplatte 56e läuft an einer Außenkante konisch zu. Ferner weist das Bodenelement 54e ein ringförmiges Wandungselement 114e auf. Das Wandungselement 114e ist zu beiden Seiten hin geöffnet. Das Wandungselement 114e weist an einem unteren Ende eine konisch zulaufende Ausnehmung auf, welche zu einer Aufnahme der Grundplatte 56e dient. Die Grundplatte 56e ist zu einem Verkleben mit der Unterlage vorgesehen, wobei in einem verklebten Zustand die Grundplatte 56e über die konischen Flächen fest mit dem Wandungselement 114e verbunden ist. Die Grundplatte 56e ist kreisförmig. Die Grundplatte 56e weist eine zentrale Ausnehmung auf. Ferner weist die Grundplatte 56e einen Aufnahmebereich zu einer Aufnahme eines Klebereservoirs auf.

Die Bodeneinheit 16e ist mehrteilig ausgebildet. Die Bodeneinheit 16e umfasst eine Positionierhilfeeinheit 34e. Die Befestigungsvorrichtung 10e weist die Positionierhilfeeinheit 34e auf. Die Positionierhilfeeinheit 34e ist dazu vorgesehen, bei einer Montage eine Positionierung der Bodeneinheit 16e zu unterstützen. Die Positionierhilfeeinheit 34e dient zu einer Vorfixierung. Ferner weist die Positionierhilfeeinheit 34e Drehmitnahmefortsätze 62e auf, welche die Positionierhilfeeinheit 34e in einem montierten Zustand drehfest mit dem Bodenelement 54e verbinden. Die Positionierhilfeeinheit 34e weist zwei Betriebspositionen auf. In einer ersten Betriebsposition ist die Positionierhilfeeinheit 34e vollständig nach unten geschoben und dient zu einer Vorfixierung. Nach einer vollständigen Verklebung des Bodenelements 54e kann die Positionierhilfeeinheit 34e zu einer Erfüllung einer Rastfunktion nach oben in eine zweite Betriebsposition geschoben werden. In der zweiten Betriebsposition ist die Positionierhilfeeinheit 34e von einer Unterlage abgehoben, erstreckt sich aber noch immer um das Bodenelement 54e und die Positionierhilfeeinheit 34e ist durch außenliegende Fortsätze 116e an der Außenseite des Wandungselements 114e gegen ein weiteres Abziehen der Positionierhilfeeinheit 34e von dem Bodenelement 54e geschützt.

Ferner weist die Befestigungsvorrichtung 10e den Befestigungsadapter 22e auf, der zur Befestigungskopplung mit der Bodeneinheit 16e vorgesehen ist. Die Befestigungskopplung ist lösbar. Die Befestigungskopplung kann von einem Bediener werkzeuglos getrennt werden. Zwischen der Bodeneinheit 16e und dem Befestigungsadapter 22e ist eine scharnierbauteilfreie Koppelstelle ausgebildet.

Der Befestigungsadapter 22e ist von einem plattenförmigen Bauteil gebildet, welches bei einer Montage dazu vorgesehen ist, in einen Aufnahmebereich der Bodeneinheit 16e eingelegt zu werden, der von der Wandung 58e und der Grundplatte 56e begrenzt ist. Der Befestigungsadapter 22e weist eine dezentrale Ausnehmung 68e auf, welche zu einer Befestigung eines Gelenkbauteils 48e eines Scharniers 64e dient.

Der Befestigungsadapter 22e ist relativ zur Bodeneinheit 16e gezielt zur Einstellung in unterschiedlichen Positionen fixierbar. Der Befestigungsadapter 22e ist in verschiedenen Verdrehpositionen relativ zur Bodeneinheit 16e mit der Bodeneinheit 16e koppelbar. Eine Verdrehposition des Befestigungsadapters 22e ist in mehreren definierten Winkellagen relativ zu der Bodeneinheit 16e einstellbar. Die Befestigungsvorrichtung 10e weist eine Verzahnungsstruktur 24e, 24e' auf, über die die Bodeneinheit 16e und der Befestigungsadapter 22e im befestigten Zustand gekoppelt sind. Die Verzahnungsstruktur 24e, 24e' ist mehrteilig ausgebildet. Der Befestigungsadapters 22e weist an einer Unterkante eine erste Verzahnungsstruktur 24e auf. Ferner ist eine zweite Verzahnungsstrukur 24e' auf einer Innenseite des Wandungselements 114e angeordnet. Die erste Verzahnungsstruktur 24e und die zweite Verzahnungsstruktur 24e' wirken zu einer Verdrehsicherung zwischen der Bodeneinheit 16e und dem Befestigungsadapter 22e zusammen.

Des Weiteren weist die Befestigungsvorrichtung 10e einen Verriegelungs- und/oder Klemmmechanismus 26e auf, über den die Bodeneinheit 16e und der Befestigungsadapter 22e im befestigten Zustand gekoppelt sind. Der Verriegelungs- und/oder Klemmmechanismus 26e ist als Rastmechanismus ausgebildet. Der Verriegelungs- und/oder Klemmmechanismus 26e ist an der Positionierhilfeeinheit 34e angeordnet. Der Verriegelungs- und/oder Klemmmechanismus 26e weist mehrere Rastelemente 76e auf. Die Rastelemente 76e sind zwischen den Drehmitnahmefortsätzen 62e der Positionierhilfeeinheit 34e angeordnet und erstrecken sich senkrecht zu einer Klebeebene nach oben. Die Rastelemente 76e sind in einem montierten Zustand des Befestigungsadapters 22e dazu vorgesehen, eine Oberkante des Befestigungsadapters 22e zu hintergreifen, wobei die Rastelemente 76e zu einem Verrasten aktiv nach innen ausgelenkt werden müssen. Bei einem Einsetzen des Befestigungsadapters 22e in das Bodenelement 54e sind die Rastelemente 76e außer Eingriff mit dem Befestigungsadapter 22e. Ein Entfernen des Befestigungsadapters 22e ist ohne die Abdeckeinheit 30e möglich, indem der Befestigungsadapter 22e nach oben abgezogen wird.

Ferner weist die Befestigungsvorrichtung 10e die Abdeckeinheit 30e auf, die neben einer Abdeckfunktion eine Systemfunktion aufweist. Die Abdeckeinheit 30e ist von einer Rosette gebildet. Die Abdeckeinheit 30e ist dazu vorgesehen, über den Befestigungsadapter 22e und die Bodeneinheit 16e gestülpt zu werden. Die Abdeckeinheit 30e weist eine kreiszylindrische Grundform auf. Die Abdeckeinheit 30e bildet einen Aufnahmebereich für den Befestigungsadapter 22e und die Bodeneinheit 16e aus. Die Abdeckeinheit 30e weist eine Verriegelungsfunktion zur Kopplung der Bodeneinheit 16e und des Befestigungsadapters 22e auf. Die Abdeckeinheit 30e ist in ihrem Design so ausgelegt, dass sie Verriegelungsfunktionen des Befestigungsadapters 22e an der Bodeneinheit 16e übernimmt. Die Abdeckeinheit 30e ist bei einem Aufsetzen in eine Montageposition dazu vorgesehen, den Verriegelungs- und/oder Klemmmechanismus 26e in der Rastposition zu bewegen. Die Rastelemente 76e sind dazu teilweise radial nach außen ausgelenkt, sodass diese bei einem Aufsetzen der Abdeckeinheit 30e radial nach innen ausgelenkt werden, um hinter dem Befestigungsadapter 22e zu hinterrasten. Hierdurch kann ein Lösen und ein Verdrehen des Befestigungsadapters 22e verhindert werden.

Des Weiteren weist die Abdeckeinheit 30e einen Grifffortsatz 32e für einen Abziehvorgang auf. Der Grifffortsatz 32e ist von einem Bund an der Außengeometrie der Abdeckeinheit 30e gebildet.

Durch ein Abheben der Abdeckeinheit 30e kann so insbesondere ein nachträgliches Lösen des Befestigungsadapters 22e von der Bodeneinheit 16e realisiert werden.

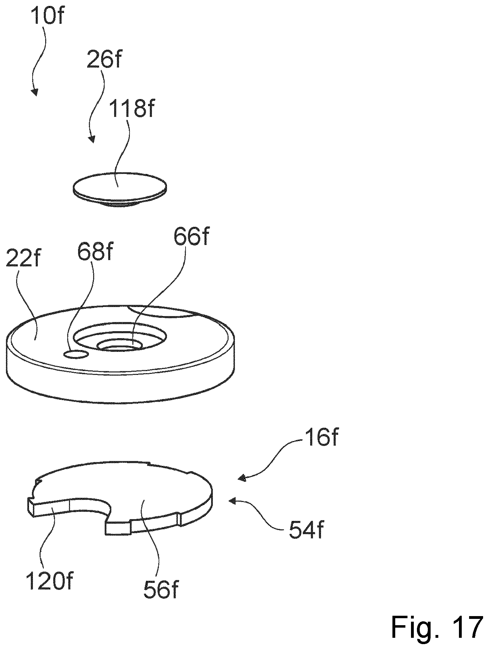

Figur 17 zeigt eine Befestigungsvorrichtung 10f mit einem Befestigungsadapter 22f, mit einer Bodeneinheit 16f und mit einem Befestigungsmagneten 118f in einer schematischen Explosionsdarstellung.

Die Bodeneinheit 16f weist ein Bodenelement 54f auf. Das Bodenelement 54f weist eine Grundplatte 56f auf. Die Grundplatte 56f ist im Wesentlichen kreisförmig. Die Grundplatte 56f weist eine seitliche Aussparung 120f auf. Über die Aussparung 120f wird insbesondere eine Relativposition des Befestigungsadapters 22f relativ zu der Bodeneinheit 16f vorgegeben. Die Grundplatte 56f ist dazu vorgesehen, mit einer Unterseite auf eine Unterlage aufgeklebt zu werden. Die Grundplatte 56f umfasst einen ferromagnetischen Stoff. Die Grundplatte 56f besteht beispielhaft aus Metall.

Ferner weist die Befestigungsvorrichtung 10f den Befestigungsadapter 22f auf, der zur Befestigungskopplung mit der Bodeneinheit 16f vorgesehen ist. Die Befestigungskopplung ist lösbar. Die Befestigungskopplung kann von einem Bediener werkzeuglos getrennt werden. Zwischen der Bodeneinheit 16f und dem Befestigungsadapter 22f ist eine scharnierbauteilfreie Koppelstelle ausgebildet. Der Befestigungsadapter 22f ist von einem ringförmigen Bauteil gebildet, welches bei einer Montage dazu vorgesehen ist, zumindest teilweise über die Bodeneinheit 16f gestülpt zu werden. Vorzugsweise ist der Befestigungsadapter 22f in einem montierten Zustand dazu vorgesehen, die Bodeneinheit 16f vollständig aufzunehmen. Ferner weist der Befestigungsadapter 22f eine erste zentrale Ausnehmung 66f zu einer Aufnahme des Befestigungsmagneten 118f auf. Zudem weist der Befestigungsadapter 22f eine zweite dezentrale Ausnehmung 68f auf, welche zu einer Befestigung eines Gelenkbauteils 48f eines Scharniers 64f dient.

Des Weiteren weist die Befestigungsvorrichtung 10f einen Verriegelungs- und/oder Klemmmechanismus 26f auf, über den die Bodeneinheit 16f und der Befestigungsadapter 22f im befestigten Zustand gekoppelt sind. Der Verriegelungs- und/oder Klemmmechanismus 26f umfasst den Befestigungsmagneten 118f. Der Befestigungsmagnet 118f wird zu einem Koppeln des Befestigungsadapters 22f mit der Bodeneinheit 16f in die zentrale Ausnehmung des Befestigungsadapters 22f eingelegt, wobei sich ein Kragen an dem Befestigungsadapter 22f abstützt. Der Befestigungsadapter 22f wird über den Magnetismus zwischen dem Befestigungsmagneten 118f und der Grundplatte 56f an der Bodeneinheit 16f gehalten. Zu einem Lösen muss die Kraft des Befestigungsmagneten 118f überwunden und der Befestigungsadapter 22f abgezogen werden.

### Bezugszeichen

- 10: Befestigungsvorrichtung
- 12: Anbaueinheit
- 14: Unterlage
- 16: Bodeneinheit
- 18: Klebefläche
- 20: Fläche
- 22: Befestigungsadapter
- 24: Verzahnungsstruktur
- 26: Verriegelungs- und/oder Klemmmechanismus
- 28: Betätigungselement
- 30: Abdeckeinheit
- 32: Grifffortsatz
- 34: Positionierhilfeeinheit
- 36: Klebefläche
- 38: Positionierring
- 40: Funktionseinlagemittel
- 42: Klebereservoir
- 44: Befestigungsfortsatz
- 46: Spreizeinheit
- 48: Gelenkbauteil
- 50: Toilettensitz
- 52: Toilettendeckel
- 54: Bodenelement
- 56: Grundplatte
- 58: Wandung
- 60: Rastausnehmung
- 62: Drehmitnahmefortsatz
- 64: Scharnier
- 66: Ausnehmung
- 68: Ausnehmung
- 70: Wandung
- 72: Wandung
- 74: Wandung
- 76: Rastelement
- 78: Führungsausnehmung
- 80: Gegenhalter
- 82: Kulissenelement
- 84: Führungssteg
- 86: Rastfortsatz
- 88: Federarm
- 90: Kulissenführungsausnehmung
- 92: Klemmring
- 94: Nut
- 96: Verdrehsicherungfortsatz
- 98: Steg
- 100: Abstützfortsatz
- 102: Abstützfortsatz
- 104: Ausnehmung
- 106: Rastfortsatz
- 108: Zylinderfortsatz
- 110: Gegenlaufkonus
- 112: Spannschraube
- 114: Wandungselement
- 116: Fortsatz
- 118: Befestigungsmagnet
- 120: Aussparung

## Patentansprüche

1. Befestigungsvorrichtung, insbesondere WC-Sitzbefestigungsvorrichtung, zur Befestigung einer Anbaueinheit (12a), insbesondere einer WC-Sitzgarnitur, an einer Unterlage (14a), insbesondere an einem WC-Sitz, mit einer Bodeneinheit (16a; 16b; 16c; 16d; 16e; 16f), die eine Klebefläche (18a; 18b; 18c; 18d; 18e; 18f) aufweist und dazu vorgesehen ist, auf eine Fläche (20a) der Unterlage (14a) aufgeklebt zu werden,
**gekennzeichnet durch**
einen Befestigungsadapter (22a; 22b; 22c; 22d; 22e; 22f), der zur Befestigungskopplung mit der Bodeneinheit (16a; 16b; 16c; 16d; 16e; 16f) vorgesehen ist.

2. Befestigungsvorrichtung nach Anspruch 1,
**gekennzeichnet durch**
eine scharnierbauteilfreie Koppelstelle zwischen Bodeneinheit (16a; 16b; 16c; 16d; 16e; 16f) und Befestigungsadapter (22a; 22b; 22c; 22d; 22e; 22f).

3. Befestigungsvorrichtung nach einem der vorhergehenden Ansprüche,
**dadurch gekennzeichnet, dass**
der Befestigungsadapter (22b; 22c; 22d; 22e; 22f) relativ zur Bodeneinheit (16b; 16c; 16d; 16e; 16f) gezielt zur Einstellung in unterschiedlichen Positionen fixierbar ist.

4. Befestigungsvorrichtung nach Anspruch 3,
**gekennzeichnet durch**
eine Verzahnungsstruktur (24b; 24c, 24c'; 24d; 24e, 24e'), über die die Bodeneinheit (16b; 16c; 16d; 16e) und der Befestigungsadapter (22b; 22c; 22d; 22e) im befestigten Zustand gekoppelt sind.

5. Befestigungsvorrichtung nach einem der vorhergehenden Ansprüche,
**gekennzeichnet durch**
einen Verriegelungs- und/oder Klemmmechanismus (26a; 26b; 26c; 26d; 26e; 26f), über den die Bodeneinheit (16a; 16b; 16c; 16d; 16e; 16f) und der Befestigungsadapter (22a; 22b; 22c; 22d; 22e; 22f) im befestigten Zustand gekoppelt sind.

6. Befestigungsvorrichtung nach Anspruch 5,
**dadurch gekennzeichnet, dass**
der Verriegelungs- und/oder Klemmmechanismus (26a; 26b; 26c; 26d; 26e) als Rastmechanismus ausgebildet ist.

7. Befestigungsvorrichtung nach Anspruch 6,
**dadurch gekennzeichnet, dass**
der Verriegelungs- und/oder Klemmmechanismus (26a; 26c) ein Betätigungselement (28a; 28c), wie insbesondere einen Druckknopf, aufweist, der dazu vorgesehen ist, eine Rast- und/oder Klemmverbindung des Verriegelungs- und/oder Klemmmechanismus (26a; 26c) zu lösen.

8. Befestigungsvorrichtung nach einem der vorhergehenden Ansprüche,
**gekennzeichnet durch**
eine Abdeckeinheit (30a; 30b; 30c; 30d; 30e), die neben einer Abdeckfunktion eine Systemfunktion aufweist.

9. Befestigungsvorrichtung nach Anspruch 8,
**dadurch gekennzeichnet, dass**
die Abdeckeinheit (30b; 30e) eine Verriegelungsfunktion zur Kopplung der Bodeneinheit (16b; 16e) und des Befestigungsadapters (22b; 22e) aufweist.

10. Befestigungsvorrichtung nach Anspruch 8 oder 9,
**dadurch gekennzeichnet, dass**
die Abdeckeinheit (30b; 30e) eine Positionierfunktion aufweist.

11. Befestigungsvorrichtung nach einem der Ansprüche 8 bis 10,
**dadurch gekennzeichnet, dass**
die Abdeckeinheit (30b; 30e) einen Grifffortsatz (32b; 32e) für einen Abziehvorgang aufweist.

12. Befestigungsvorrichtung nach einem der vorhergehenden Ansprüche,
**gekennzeichnet durch**
zumindest eine Positionierhilfeeinheit (34a; 34b; 34e), die dazu vorgesehen ist, bei einer Montage eine Positionierung der Bodeneinheit (16a; 16b; 16e) zu unterstützen.

13. Befestigungsvorrichtung nach Anspruch 12,
**dadurch gekennzeichnet, dass**
die Positionierhilfeeinheit (34a; 34b; 34e) eine Klebefläche (36a) mit einem Sekundärklebstoff umfasst.

14. Befestigungsvorrichtung nach Anspruch 12 oder 13,
**dadurch gekennzeichnet, dass**
die Positionierhilfeeinheit (34a; 34b; 34e) einen Positionierring (38a; 38b; 38e) aufweist.

15. Befestigungsvorrichtung nach einem der vorhergehenden Ansprüche,
**gekennzeichnet durch**
ein Funktionseinlagemittel (40c), das zu einer Einstell- und Lagerfunktion eine Ergänzungsfunktion aufweist.

16. Befestigungsvorrichtung zumindest nach den Ansprüchen 7 und 15,
**dadurch gekennzeichnet, dass**
das Funktionseinlagemittel (40c) als Blockierelement ausgebildet ist, das dazu vorgesehen ist, eine Betätigungsfunktion des Betätigungselements (28c) zu unterbinden.

17. Befestigungsvorrichtung nach einem der vorhergehenden Ansprüche,
**dadurch gekennzeichnet, dass**
die Bodeneinheit (16a; 16b; 16c; 16d; 16e; 16f) mehrteilig ausgebildet ist.

18. Befestigungsvorrichtung zumindest nach den Ansprüchen 12 und 17,
**dadurch gekennzeichnet, dass**
die Bodeneinheit (16a; 16b; 16e) die Positionierhilfeeinheit (34a; 34b; 34e) umfasst.

19. Befestigungsvorrichtung nach einem der vorhergehenden Ansprüche,
**dadurch gekennzeichnet, dass**
die Bodeneinheit (16a; 16b; 16c; 16d; 16e) ein Klebereservoir (42a), insbesondere Klebstoffkapsel oder Klebstoffapplikation, umfasst.

20. Befestigungsvorrichtung nach einem der vorhergehenden Ansprüche,
**gekennzeichnet durch**
einen Befestigungsfortsatz (44d), der dazu vorgesehen ist, in eine Ausnehmung der Unterlage, insbesondere in eine Ausnehmung im WC-Sitz, eingeführt zu werden.

21. Befestigungsvorrichtung nach Anspruch 20,
**gekennzeichnet durch**
eine Spreizeinheit (46d), die dazu vorgesehen ist, den Befestigungsfortsatz (44d) zur Erzeugung einer Klemmkraft aufzuspreizen.

22. Befestigungsvorrichtung nach einem der vorhergehenden Ansprüche,
**dadurch gekennzeichnet, dass**
der Befestigungsadapter (22a; 22b; 22c; 22d; 22e; 22f) fest mit einem Gelenkbauteil (48a; 48b; 48c; 48d; 48e; 48f), insbesondere mit einem WC-Sitzgelenk, verbunden ist.

23. Befestigungsadapter (22a; 22b; 22c; 22d; 22e; 22f) einer Befestigungsvorrichtung (10a; 10b; 10c; 10d; 10e; 10f) nach einem der vorhergehenden Ansprüche.

24. Bodeneinheit (16a; 16b; 16c; 16d; 16e; 16f) einer Befestigungsvorrichtung (10a; 10b; 10c; 10d; 10e; 10f) nach einem der Ansprüche 1 bis 22.

25. System mit einer Befestigungsvorrichtung (10a; 10b; 10c; 10d; 10e; 10f) nach einem der Ansprüche 1 bis 22,
**gekennzeichnet durch**
eine Anbaueinheit (12a), wie insbesondere eine WC-Sitzgarnitur, die dazu vorgesehen ist, mit dem Befestigungsadapter (22a; 22b; 22c; 22d; 22e; 22f) und der Bodeneinheit (16a; 16b; 16c; 16d; 16e, 16f) auf der Unterlage (14a), insbesondere dem WC-Sitz, befestigt zu werden.

26. System mit einem Befestigungsadapter (22a; 22b; 22c; 22d; 22e; 22f) nach Anspruch 23 und einer Anbaueinheit (12a), wie insbesondere einer WC-Sitzgarnitur.

27. Verfahren zur Herstellung einer Befestigungsvorrichtung (10a; 10b; 10c; 10d; 10e; 10f) nach einem der Ansprüche 1 bis 22

28. Verfahren zur Montage einer Befestigungsvorrichtung (10a; 10b; 10c; 10d; 10e; 10f) nach einem der Ansprüche 1 bis 22.

29. Verfahren nach Anspruch 28,
**dadurch gekennzeichnet, dass**
in zumindest einem Klebeschritt die Bodeneinheit (16a; 16b; 16c; 16d; 16e; 16f) auf die Unterlage (14a) aufgeklebt wird, wobei die Anbaueinheit (12a) nach dem Klebeschritt frei positionierbar ist.
